(19) Europäisches Patentamt
European Patent Office
Office européen des brevets

(11) **EP 3 184 448 B1**

(12) **EUROPEAN PATENT SPECIFICATION**

(45) Date of publication and mention of the grant of the patent:
**03.04.2019 Bulletin 2019/14**

(21) Application number: **15833315.3**

(22) Date of filing: **07.07.2015**

(51) Int Cl.:
***B65D 1/02*** *(2006.01)* ***B32B 27/18*** *(2006.01)*
***B32B 27/34*** *(2006.01)* ***B32B 27/36*** *(2006.01)*
***B65D 81/26*** *(2006.01)* ***B32B 27/08*** *(2006.01)*

(86) International application number:
**PCT/JP2015/069519**

(87) International publication number:
**WO 2016/027577 (25.02.2016 Gazette 2016/08)**

(54) **MULTILAYER PLASTIC CONTAINER**

MEHRSCHICHTKUNSTSTOFFBEHÄLTER

RÉCIPIENT EN MATIÈRE PLASTIQUE MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2014 JP 2014169229**

(43) Date of publication of application:
**28.06.2017 Bulletin 2017/26**

(73) Proprietor: **Mitsubishi Gas Chemical Company, Inc.**
**Tokyo 100-8324 (JP)**

(72) Inventor: **YAMAMOTO Takashi**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**EP-A1- 1 475 308**
**EP-A1- 2 792 713**
**WO-A1-01/85450**
**JP-A- H11 514 385**
**JP-A- 2001 097 342**
**JP-A- 2004 532 296**
**JP-A- 2005 112 468**
**JP-A- 2013 039 964**
**JP-A- 2015 034 226**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a multilayer plastic container, and more specifically to a container for packaging substances, such as beverages, food products, cosmetic products, and pharmaceutical products, which dislike oxygen.

Background Art

Various types of plastic containers have been used as containers for packaging beverages, food products, cosmetic products, pharmaceutical products and the like. Plastic containers are excellent in terms of lightness, high transparency, high flexibility in design, safety, etc. On the other hand, since gas such as oxygen easily permeates through the container wall of such a plastic container, in comparison to a metallic can or a glass bottle, it is important for plastic containers to prevent the degradation of content and a reduction in taste or flavor, which are caused by oxygen remaining in the containers or oxygen outside of the containers that permeates through the container walls.

Conventionally, a method of preventing oxygen from entering into a plastic container, which comprises producing a plastic container having a wall that has a multilayer structure, for example, by establishing a gas barrier layer consisting of a m-xylylene group-containing polyamide resin in a surface layer consisting of a thermoplastic polyester resin such as polyethylene terephthalate, has been proposed (Patent Literature 1: JP Patent Publication (Kokai) No, 63-178930 A).

Moreover, what is called "high barrier container," in which a layer formed by mixing transition metal salts such as organic acid cobalt into a m-xylylene group-containing polyamide resin is established, and oxygen is absorbed by catalytic oxidation of the m-xylylene group-containing polyamide resin, so as to achieve oxygen-absorbing properties as well as gas barrier properties, has been known (Patent Literature 2: JP Patent Publication (Kokai) No. 2002-321774 A).

However, although the invasion of oxygen from outside of the container can be prevented by establishing such a gas barrier layer, oxygen remaining in the container cannot be removed. Furthermore, when transition metal salts are mixed into a such m-xylylene group-containing polyamide resin, gas barrier properties are improved. At the same time, however, the mixing of transition metal salts is problematic in that burnt deposits may be generated in a polyamide resin during the molding of a container, which may result in a reduction in productivity, or in that the yellowing of a thermoplastic polyester resin may easily occur if the polyamide resin is mixed upon recycling.

As a multilayer plastic container capable of preventing the entering of oxygen from outside of the container and also removing oxygen remaining in the container, a container prepared by forming an oxygen-absorbing layer consisting of a reaction product of a polyamide resin and polyamide resin-reactive oxidizable polydiene or oxidizable polyether, and transition metal salts, as a core layer, then establishing a gas barrier layer consisting of an ethylene-vinyl alcohol copolymer on both sides thereof, and then establishing a surface layer consisting of a polyolefin resin further on both sides thereof, has been proposed (Patent Literature 3: JP Patent Publication (Kokai) No. 2006-281640 A).

However, the proposed container is problematic in that, since the barrier layers and the surface layers are located more inside than the oxygen-absorbing layer, oxygen existing in the container hardly reaches the oxygen-absorbing layer, and thus, the oxygen in the container cannot be promptly scavenged, and also in that, since the production of a five-layer bottle using three types of resins is complicated, it requires technical skill, and also requires high costs. Further, the proposed container is also problematic in that, since transition metal salts are mixed into the polyamide resin, productivity is decreased due to generation of burnt deposits.

Further, as a multilayer plastic container capable of removing oxygen remaining in the container, a container, which has an oxygen-blocking layer consisting of a gas barrier resin such as an ethylene-vinyl alcohol copolymer, and an oxygen-absorbing layer having polymer radical-generating ability, such as a polyolefin resin, which is established on a side more inside than the oxygen-blocking layer, has been proposed (Patent Literature 4: JP Patent Publication (Kokai) No. 5-32277 A).

However, this container is problematic in that it requires application of light or ionizing radiation to at least the inside of the oxygen-blocking layer and the oxygen-absorbing layer, the filling of content until polymer radicals generated thereby are not deactivated, and the subsequent hermetical sealing, and thus, it is difficult to handle this container. Still further, this container is also problematic in that, since application of light or ionizing radiation is attended with compulsory deterioration of a base material resin itself, it is likely to cause yellowing or a reduction in flexibility, and also in that extra costs are required for introduction of an apparatus for such application of light or ionizing radiation.

Citation List

Patent Literature

Patent Literature 1: JP Patent Publication (Kokai) No. 63-178930 A
Patent Literature 2: JP Patent Publication (Kokai) No. 2002-321774 A
Patent Literature 3: JP Patent Publication (Kokai) No. 2006-281640 A
Patent Literature 4: JP Patent Publication (Kokai) No. 5-32277 A

EP 1 475 308 A1 discloses a multilayer container comprising an intermediate layer which is mainly made of a polyamide resin, wherein the resin may contain at least one metal element selected from the group consisting of transition metals in group VIII of the periodic table, manganese, copper and zinc.

Summary of Invention

Technical Problem

Under such circumstances, it has been desired to develop a multilayer plastic container, which prevents the entering of oxygen from outside of the container, efficiently absorbs oxygen remaining in the container and also oxygen from outside of the container that permeates through the container wall, and effectively prevents the degradation of content and a reduction in flavor such as taste or aroma, which are caused by oxygen. In particular, it has been desired to provide a multilayer plastic container, an oxygen-blocking layer of which is substantially transition metal-free, and which can efficiently absorb oxygen.

Solution to Problem

As a result of intensive studies directed towards achieving the aforementioned objects, the present inventors have found that a multilayer plastic container having at least one oxygen-absorbing layer and at least one oxygen-blocking layer, in which a combination of an oxygen-absorbing layer and an oxygen-blocking layer each consisting of specific materials is used, and at least one of the oxygen-absorbing layers is arranged more inside than the oxygen-blocking layer, has high gas barrier properties over a long period of time even if the oxygen-blocking layer is substantially transition metal-free, can effectively prevent the degradation of content or a reduction in flavor caused by oxygen while reducing the amount of an oxygen absorber mixed into the oxygen-absorbing layer in the inner layer side, and also can improve productivity by suppressing generation of burnt deposits during molding, thereby completing the present invention.

Specifically, the present invention provides the following multilayer plastic container.

[1] A multilayer plastic container having at least one oxygen-absorbing layer and at least one oxygen-blocking layer, wherein
the oxygen-absorbing layer is a layer formed from a thermoplastic polyester resin composition comprising a thermoplastic polyester resin and an oxygen absorber, and the content of the oxygen absorber to the total mass of the thermoplastic polyester resin composition is 0.01% to 3% by mass,
the oxygen-blocking layer is a layer formed from a polyamide resin composition comprising a polyamide resin, and the content of a metal selected from the group consisting of cobalt, copper, cerium, aluminum and manganese to the total mass of the polyamide resin composition is less than 10 ppm, and
at least one of the oxygen-absorbing layers is arranged on a side more inside than the oxygen-blocking layer.
[2] The container according to the above [1], wherein the polyamide resin comprises 50 mol % or more of m-xylylenediamine units as diamine units.
[3] The container according to the above [1] or [2], wherein thermoplastic polyester resin comprises 70 mol % or more of ethylene terephthalate units.
[4] The container according to any one of the above [1] to [3], wherein at least one of the oxygen-absorbing layers is arranged such that it is allowed to come into contact with the content.
[5] The container according to any one of the above [1] to [4], wherein the oxygen absorber is a composition comprising an oxygen-scavenging resin that is a polymer to the main chain or branched chain of which a polyolefin oligomer segment having a carbon-carbon double bond binds, and a transition metal compound.
[6] The container according to any one of the above [1] to [4], wherein the oxygen absorber is a composition comprising an oxidizable polyamide resin and a transition metal compound.
[7] The container according to any one of the above [1] to [6], which has a three-layer structure consisting of an oxygen-absorbing layer / an oxygen-blocking layer / an oxygen-absorbing layer.
[8] The container according to any one of the above [1] to [6], which has a five-layer structure consisting of an oxygen-absorbing layer / an oxygen-blocking layer / an oxygen-absorbing layer / an oxygen-blocking layer / an oxygen-absorbing layer.

[9] The container according to the above [7] or [8], wherein the oxygen-absorbing layers are allowed to come into contact with one another in at least a portion.

[10] The container according to any one of the above [1] to [9], which has the shape of a bottle.

Advantageous Effects of Invention

According to the present invention, a multilayer plastic container, which reduces the content of a metal selected from the group consisting of cobalt, copper, cerium, aluminum and manganese in an oxygen-blocking layer, has high gas barrier properties, and is capable of effectively preventing the degradation of content and a reduction in flavor such as taste or aroma, which are caused by oxygen, can be provided. According to a preferred aspect of the present invention, since the oxygen-blocking layer(s) comprised in the multilayer plastic container of the present invention are substantially transition metal-free, generation of burnt deposits during molding and the yellowing of the thermoplastic polyester resin caused by the mixing of a polyamide resin upon recycling can be suppressed.

Brief Description of Drawings

[Figure 1] Figure 1 is a schematic partial cross-sectional view showing an example of the three-layer structure of the multilayer plastic container of the present invention.

[Figure 2] Figure 2 is a schematic partial cross-sectional view showing an example of the five-layer structure of the multilayer plastic container of the present invention.

[Figure 3] Figure 3 is a schematic cross-sectional view showing an example of the multilayer plastic container of the present invention.

Description of Embodiments

Hereinafter, the multilayer plastic container of the present invention will be specifically described.

The multilayer plastic container of the present invention is a multilayer plastic container having at least one oxygen-absorbing layer and at least one oxygen-blocking layer, which is characterized in that
the oxygen-absorbing layer is a layer formed from a thermoplastic polyester resin composition comprising a thermoplastic polyester resin and an oxygen absorber, and the content of the oxygen absorber to the total mass of the thermoplastic polyester resin composition is 0.01% to 3% by mass,
the oxygen-blocking layer is a layer formed from a polyamide resin composition comprising a polyamide resin, and the content of a specific transition metal to the total mass of the polyamide resin composition is less than 10 ppm, and
at least one of the oxygen-absorbing layers is arranged on a side more inside than the oxygen-blocking layer.

In the present invention, by combining an oxygen-absorbing layer and an oxygen-blocking layer, which are composed of specific materials, oxygen can be efficiently absorbed, even if the oxygen-blocking layer is substantially transition metal-free. It is to be noted that, in the present description, the phrase "oxygen-blocking layer is substantially transition metal-free" is used to mean that the content of a metal selected from the group consisting of cobalt, copper, cerium, aluminum and manganese in a polyamide resin composition that constitutes the oxygen-blocking layer is less than 10 ppm. The content of the above-described transition metal is preferably less than 5 ppm, more preferably less than 3 ppm, further preferably less than 1 ppm, and particularly preferably less than 0.1 ppm.

In addition, in the present invention, by arranging at least one of the oxygen-absorbing layers on a side more inside than the oxygen-blocking layer, the oxygen-blocking layer blocks oxygen that enters from the outside, and thus, the oxygen-absorbing performance of the oxygen-absorbing layer arranged in the inner layer side is not reduced by oxygen entering from outside of the container through the container wall, and the oxygen-absorbing layer can efficiently absorb oxygen existing in the container. Moreover, by arranging the oxygen-absorbing layer and the oxygen-blocking layer as described above, the amount of an oxygen absorber comprised in the oxygen-absorbing layer arranged in the inner layer side can be reduced, and the container as a whole can exhibit gas barrier properties that are equivalent to or higher than a high barrier container, while reducing the amount of the oxygen absorber used, in comparison to the conventional high barrier container.

Furthermore, according to a preferred aspect of the present invention, since the oxygen-blocking layer is substantially transition metal-free, generation of burnt deposits during the molding of a multilayer plastic container, or the yellowing of a thermoplastic polyester resin that occurs when a polyamide resin is mixed upon recycling, can be suppressed. Hereafter, the configuration of the multilayer plastic container of the present invention will be specifically described.

1. Oxygen-absorbing layer

In the multilayer plastic container of the present invention, the oxygen-absorbing layer is a layer for absorbing oxygen remaining in the container, oxygen permeating from outside of the container through the container wall, and the like. In the multilayer plastic container of the present invention, the oxygen-absorbing layer may be a single layer, or two or more layers.

In the present invention, the oxygen-absorbing layer is formed from a thermoplastic polyester resin composition comprising a thermoplastic polyester resin and an oxygen absorber.

< Thermoplastic polyester resin >

In the present description, the thermoplastic polyester resin can be used without particular limitation, as long as it has an ester bond {-C(=O)O-} in a repeating structural unit of a polymer main chain.

In general, the polyester resin is obtained by polycondensation of one or two or more selected from polyvalent carboxylic acids including dicarboxylic acid and their ester-forming derivatives, and polyhydric alcohol including glycol, or by polycondensation of hydroxycarboxylic acids and their ester-forming derivatives, or by ring-opening polymerization of a cyclic ester, but examples of the formation of the polyester resin are not limited thereto.

Examples of the dicarboxylic acid include: saturated aliphatic dicarboxylic acids, such as oxalic acid, malonic acid, succinic acid, glutaric acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbomanedicatboxylic acid, tricyclodecanedicarboxylic acid, or dimer acid, or their ester-forming derivatives; unsaturated aliphatic dicarboxylic acids, such as fumaric acid, maleic acid, or itaconic acid, or their ester-forming derivatives; and aromatic dicarboxylic acids, such as orthophthalic acid, isophthalic acid, terephthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, biphenylketonedicarboxylic acid, 4,4'-biphenyldicarboxylic acid, 4,4'-biphenylsulfonedicarboxylic acid, 4,4'-biphenyletherdicarboxylic acid, 1,2-bis(phenoxy)ethane-p,p'-dicarboxylic acid, pamoin acid, or anthracenedicarboxylic acid, or their ester-forming derivatives.

Among the above-described dicarboxylic acids, in particular, aromatic dicarboxylic acids such as terephthalic acid, isophthalic acid, orthophthalic acid, naphthalenedicarboxylic acid, or 4,4'-biphenyldicarboxylic acid, or their ester-forming derivatives are preferably used, in terms of the physical properties of the obtained polyester, etc. As necessary, other dicarboxylic acids may be copolymerized. Moreover, copolymer polyester resins comprising constituting units derived from alicyclic bifunctional compounds, such as 1,2-cyclohexanedicarboxylic acid, 1,3-cyclohexanedicarboxyhc acid and 1,4-cyclohexanedicarboxylic acid, are easily produced, and these resins can improve the drop impact strength or transparency of a multilayer plastic container. Among these compounds, 1,4-cyclohexanedicarboxylic acid, which is easily available and has high drop impact strength, is preferably used.

Examples of polyvalent carboxylic acids other than the aforementioned dicarboxylic acids include ethanetricarboxylic acid, propanetricarboxylic acid, butanetetracarboxylic acid, pyromellitic acid, trimellitic acid, trimesic acid, 3,4,3',4'-biphenyltetracarboxylic acid, and their ester-forming derivatives.

Examples of the glycol include: aliphatic glycols, such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, methylpentanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, norbornenedimethanol, tricyclodecanedimethanol, 1,10-decamethylene glycol, 2-butene-1,4-diol, 1,12-dodecanediol, polyethylene glycol, polytrimethylene glycol, or polytetramethylene glycol; and aromatic glycols, such as hydroquinone, 4,4'-dihydroxybisphenol, 1,4-bis(β-hydroxyethoxy)benzene. 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, or glycols formed by adding ethylene oxide to these glycols.

Among the above-described glycols, in particular, ethylene glycol, 1,3-propylene glycol, 1,4-butylene glycol, 1,4-cyclohexanedimethanol, or neopentyl glycol is preferably used as a main component. Examples of polyhydric alcohols other than the aforementioned glycols include trimethylolmethane, trimethylolethane, trimethylolpropane, pentaerythritol, glycerol, and hexanetriol.

Examples of the hydroxycarboxylic acid include: aliphatic hydroxycarboxylic acids, such as lactic acid, citric acid, malic acid, tartaric acid, hydroxyacetic acid, 3-hydroxybutyric acid, 10-hydroxyoctadecanoic acid, hydroxyacrylic acid, 2-hydroxy-2-methylpropionic acid, and hydroxybutyric acid; p-hydroxybenzoic acid, p-(2-hydroxyethoxy)benzoic acid, hydroxytoluic acid, hydroxynaphtho acid, 3-(hydroxyphenyl)propionic acid, hydroxyphenylacetic acid, and 3-hydroxy-3-phenylpropionic acid; and aromatic hydroxycarboxylic acids having a diol unit, which are derived from 2,2-bis(4-(2-hydroxyethoxyphenyl)propane, 2-(4-(2-(2-hydroxyethoxy)ethoxy)phenyl)-2-(4-(2-hydroxyethoxy)phenyl)propane, 2,2-bis(4-(2-(2-hydroxyethoxy)ethoxy)phenyl)propane, bis(4-(2-hydroxyethoxy)phenyl)sulfone, (4-((2-hydroxyethoxy)ethoxy)phenyl)-(4-(2-hydroxyethoxy)phenyl)sulfone, 1,1-bis(4-(2-hydroxyethoxy)phenyl)cyclohexane, 1-(4-(2-(2-hydroxyethoxy)ethoxy)ethoxy)phenyl)-1-(4-(2-hydroxyethoxy)phenyl)cyclo hexane, 1,1-bis(4-(2-(2-hydroxyethoxy)ethoxy)phenyl)cyclohexane, 2,2-bis(4-(2-hydroxyethoxy)-2,3,5,6-tetrabromophenyl)propane, 1,4-bis(2-hydroxyethoxy)benzene, 1-(2-hydroxyethoxy)-4-(2-(2-hydroxyethoxy)ethoxy)benzene, or 1,4-bis(2-(2-hydroxyethoxy)ethoxy)benzene. Furthermore, other examples include: aromatic hydroxycarboxylic acids derived from 2,2-bis(4-(2-hydroxyethoxy)phenyl)propane, bis(4-(2-hydroxyethoxy)phenyl)sulfone and 1,4-bis(2-hydroxyethoxy)benzene, etc., among the aforementioned compounds; and alicyclic hydroxycarboxylic acids, such as 4-hydroxycyclohexanecarboxylic acid, hydroxymethylnorbornenecarboxylic acid, and hydroxymethyltricyclodecanecarboxylic acid, or their ester-forming derivatives.

Examples of the cyclic ester include ε-caprolactone, β-propiolactone, β-methyl-β-propiolactone, δ-valerolactone, glycolide, and lactide.

Examples of the ester-forming derivatives of polyvalent carboxylic acids and hydroxycarboxylic acids include their alkyl ester, acid chloride, and acid anhydride.

In the thermoplastic polyester resin used in the present invention, the main polyvalent carboxylic acid component is preferably terephthalic acid or an ester-forming derivative thereof, or naphthalenedicarboxylic acid or an ester-forming derivative thereof, and the main glycol component is preferably alkylene glycol.

The polyester, in which the main polyvalent carboxylic acid component is terephthalic acid or an ester-forming derivative thereof, is a polyester comprising terephthalic acid or an ester-forming derivative thereof in a total amount of preferably 70 mol % or more, more preferably 80 mol % or more, and further preferably 90 mol % or more, based on the total acid components. Also, the polyester, in which the main acid component is naphthalenedicarboxylic acid or an ester-forming derivative thereof, is a polyester comprising naphthalenedicarboxylic acid or an ester-forming derivative thereof in a total amount of preferably 70 mol % or more, more preferably 80 mol % or more, and further preferably 90 mol % or more, based on the total acid components. By allowing the polyester to comprise terephthalic acid or an ester-forming derivative thereof in total amount of 70 mol % or more based on the total acid components, the thermoplastic polyester resin hardly becomes an amorphous substance, the multilayer plastic container is hardly shrunk by heat when a high-temperature product is filled therein, and thus, it has high heat resistance.

Preferred examples of the naphthalenedicarboxylic acid or an ester-forming derivative thereof used in the present invention include 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylyc acid, and their ester-forming derivatives, which have been exemplified for the aforementioned dicarboxylic acids.

The polyester, in which the main glycol component is alkylene glycol, is a polyester comprising alkylene glycol in a total amount of preferably 70 mol % or more, more preferably 80 mol % or more, and further preferably 90 mol % or more, based on the total glycol components. The alkylene glycol used herein may comprise a substituent or an alicyclic structure in a molecular chain thereof.

The thermoplastic polyester resin used in the present invention particularly preferably comprises terephthalic acid as a main polyvalent carboxylic acid component, and ethylene glycol as a main glycol component.

As a copolymer component other than the above-described terephthalic acid/ethylene glycol, at least one selected from the group consisting of isophthalic acid, orthophthalic acid, 2,6-naphthalenedicarboxylic acid, 4,4'-biphenyldicarboxylic acid, diethylene glycol, neopentyl glycol, 1,4-cyclohexanedimethanol, 1,2-propanediol, 1,3-propanediol and 2-methyl-1,3-propanediol is preferable for achieving both transparency and moldability, and in particular, at least one selected from the group consisting of isophthalic acid, 2,6-naphthalenedicarboxylic acid, diethylene glycol, neopentyl glycol and 1,4-cyclohexanedimethanol is more preferable.

Among others, a copolymer polyester resin comprising a constituting unit derived from isophthalic acid is excellent in that it has excellent moldability and it prevents the whitening of a molded product because of slow crystallization speed. The ratio of such isophthalic acid-derived constituting units is preferably 1 to 10 mol %, more preferably 1 to 8 mol %, and further preferably 1 to 6 mol %, based on the dicarboxylic acid units.

Moreover, a copolymer polyester resin comprising a constituting unit derived from naphthalenedicarboxylic acid increases the glass transition point of the resin, improves heat resistance, and also absorbs ultraviolet ray. Accordingly, such a copolymer polyester is preferably used in the production of a multilayer plastic container that is required to have resistance to ultraviolet ray. The ratio of such naphthalenedicarboxylic acid-derived constituting units in the copolymer polyester resin is preferably 0.1 to 15 mol %, and more preferably 1.0 to 10 mol %, based on the dicarboxylic acid units. By setting the ratio in the aforementioned range, it becomes possible to suitably protect content contained in the multilayer plastic container from ultraviolet ray. Furthermore, a 2,6-naphthalenedicarboxylic acid component is preferably used as naphthalenedicarboxylic acid, since it is easily produced and has high economic efficiency.

A preferred example of the thermoplastic polyester resin used in the present invention is a polyester composed of ethylene terephthalate units as main repeating units, and the present thermoplastic polyester resin is more preferably a linear polyester comprising 70 mol % or more of ethylene terephthalate units, further preferably a linear polyester

comprising 80 mol % or more of ethylene terephthalate units, and particularly preferably a linear polyester comprising 90 mol % or more of ethylene terephthalate units.

Another preferred example of the thermoplastic polyester resin used in the present invention is a polyester composed of ethylene-2,6-naphthalate units as main repeating units, and the present thermoplastic polyester resin is more preferably a linear polyester comprising 70 mol % or more of ethylene-2,6-naphthalate units, further preferably a linear polyester comprising 80 mol % or more of ethylene-2,6-naphthalate units, and particularly preferably a linear polyester comprising 90 mol % or more of ethylene-2,6-naphthalate units.

Other preferred examples of the thermoplastic polyester resin used in the present invention include a linear polyester comprising 70 mol % or more of propylene terephthalate units, a linear polyester comprising 70 mol % or more of propylene naphthalate units, a linear polyester comprising 70 mol % or more of 1,4-cyclohexanedimethylene terephthalate units, a linear polyester comprising 70 mol % or more of butylene naphthalate units, and a linear polyester comprising 70 mol % or more of butylene terephthalate units.

In particular, examples of the composition of a polyester as a whole, which is preferable for achieving both transparency and moldability, include a combination of terephthalic acid/isophthalic acid//ethylene glycol, a combination of terephthalic acid//ethylene glycol/1,4-cyclohexanedimethanol, and a combination of terephthalic acid//ethylene glycol/neopentyl gloclo. Needless to say, small amount (5 mol % or less) of diethylene glycol generated as a result of dimerization of ethylene glycol during an esterification (transesterification) reaction and a polycondensation reaction may be naturally comprised in the reaction product.

Another preferred example of the thermoplastic polyester resin used in the present invention is polyglycolic acid obtained by polycondensation of glycolic acid or methyl glycolate, or by ring-opening polycondensation of glycolide. Other components such as lactide may be copolymerized with this polyglycolic acid.

In one embodiment of the present invention, the thermoplastic polyester resin may comprise constituting units derived from a monofunctional compound such as monocarboxylic acid, monoalcohol, or their ester-forming derivatives. Specific examples of such a compound include: aromatic monofunctional carboxylic acids, such as benzoic acid, o-methoxybenzoic acid, m-methoxybenzoic acid, p-methoxybenzoic acid, o-methylbenzoic acid, m-methylbenzoic acid, p-methylbenzoic acid, 2,3-dimethylbenzoic acid, 2,4-dimethylbenzoic acid, 2,5-dimethylbenzoic acid, 2,6-dimethylbenzoic acid, 3,4-dimethylbenzoic acid, 3,5-dimethylbenzoic acid, 2,4,6-trimethylbcnzoic acid, 2,4,6-trimethoxybenzoic acid, 3,4,5-trimethoxybenzoic acid, 1-naphthoic acid, 2-naphthoic acid, 2-biphenylcarboxylic acid, 1-naphthaleneacetic acid, and 2-naphthaleneacetic acid; aliphatic monocarboxylic acids, such as propionic acid, butyric acid, n-octanoic acid, n-nonanoic acid, myristic acid, pentadecanoic acid, stearic acid, oleic acid, linoleic acid, and linolenic acid; ester-forming derivatives of these monocarboxylic acids; aromatic alcohols, such as benzyl alcohol, 2,5-dimethyl benzyl alcohol, 2-phenethyl alcohol, phenol, 1-naphthol, and 2-naphthol; and aliphatic or alicyclic monoalcohols, such as butyl alcohol, hexyl alcohol, octyl alcohol, pentadecyl alcohol, stearyl alcohol, polyethylene glycol monoalkyl ether, polypropylene glycol monoalkyl ether, polytetramethylene glycol monoalkyl ether, oleyl alcohol, and cyclododecanol.

Among these compounds, from the viewpoint of the ease of production of polyesters and production costs, benzoic acid, 2,4,6-trimethoxybenzoic acid, 2-naphthoic acid, stearic acid, and stearyl alcohol are preferable. The ratio of such monofunctional compound-derived constituting units is 5 mol % or less, preferably 3% or less, and further preferably 1% or less, based on the total molar number of all constituting units of the thermoplastic polyester resin. The monofunctional compound functions to block the terminal group of a polyester resin molecular chain or the terminal group of a branched chain, and it thereby suppresses excessive crosslinking of the thermoplastic polyester resin and prevents gelatinization.

Moreover, in one embodiment of the present invention, the thermoplastic polyester resin may comprise, as a copolymer component, a polyfunctional compound having at least three groups selected from a carboxyl group, a hydroxy group and their ester-forming groups. Examples of the polyfunctional compound include: aromatic polycarboxylic acids, such as trimesic acid, trimellitic acid, 1,2,3-benzenetricarboxylic acid, pyromcllitic acid, and 1,4,5,8-naphthalenetetracarboxylic acid; alicyclic polycarboxylic acids, such as 1,3,5-cyclohexanetricarboxylic acid; aromatic polyhydric alcohols such as 1,3,5-trihydroxybenzene; aliphatic or alicyclic polyhydric alcohols, such as trimethylolpropane, pentaerythritol, glycerin, and 1,3,5-cyclohexanetriol; aromatic hydroxycarboxylic acids, such as 4-hydroxyisophthalic acid, 3-hydroxyisophthalic acid, 2,3-dihydroxybenzoic acid, 2,4-dihydroxybenzoic acid, 2,5-dihydroxybenzoic acid, 2,6-dihydroxybenzoic acid, protocatechuic acid, gallic acid, and 2,4-dihydroxyphenylacetic acid; aliphatic hydroxycarboxylic acids, such as tartaric acid and malic acid; and the ester forms thereof.

The ratio of the polyfunctional compound-derived constituting units in the thermoplastic polyester resin is preferably less than 0.5 mol %, based on the total molar number of all constituting units of the polyester.

Among the aforementioned polyfunctional compounds, preferred polyfunctional compounds include trimellitic acid, pyromellitic acid, trimesic acid, trimethylolpropane, and pentaerythritol, from the viewpoint of the ease of production of the thermoplastic polyester resin and production costs.

Furthermore, in one embodiment of the present invention, the thermoplastic polyester resin may comprise at least one type of metal sulfonate.

The metal sulfonate can be introduced into the thermoplastic polyester resin by using a metal sulfonate group-containing compound as a copolymer component of the thermoplastic polyester resin.

The metal sulfonate group-containing compound is represented by the formula: X-R, wherein X represents dicarboxylic acid or diol, and R represents -$SO_3M$. Herein, M represents a metal in a monovalent or divalent state, which can be selected from Li, Na, Zn, Sn, K and Ca. Among these metals, M is preferably Na or Li, in terms of the ease of production or the like. The metal sulfonate group-containing compound contains two or more functional groups, and in the above formula, R directly binds to the aromatic ring of X representing diol or dicarboxylyc acid, or to a side chain such as a methylene group.

In the above formula, X is not particularly limited, and example of such X include compounds formed by remving one hydrogen from compounds selected from: aromatic dicarboxylic acids, such as terephthalic acid, isophthalic acid, orthophthalic acid, naphthalenedicarboxylic acid, diphenyletherdicarboxylic acid, and diphenyl-4,4-dicarboxylic acid; straight chain aliphatic dicarboxylic acids, such as oxalic acid, malonic acid, succinic acid, glutaric acid, adipic acid, pimelic acid, suberic acid, azelaic acid, or sebacic acid; and alicyclic dicarboxylic acids such as cyclohexanedicarboxylic acid. Among such compounds, in terms of the ease of production or the like, isophthalic acid is preferable.

In addition, other examples of X in the above formula include compounds formed by removing one hydrogen from compounds including: straight chain aliphatic glycols, such as ethylene glycol, 1,3-propanediol, 1,4-butanediol, 1,5-pentanediol, 1,6-hexanediol, 1,9-nonanediol, or diethylene glycol; alicyclic diols including cyclohexanediols such as 1,3-cyclohexanediol, and cyclohexanedimethanol. Among such compounds, ethylene glycol, diethylene glycol, and cyclohexanediol are preferable.

The amount of the metal sulfonate (-$SO_3M$) in the thermoplastic polyester resin is in the range of 0.05 to 10 mol %, more preferably in the range of 0.1 to 5 mol %, further preferably in the range of 0.2 to 4 mol %, and most preferably in the range of 0.4 to 2 mol %, based on the total molar number of all constituting units. The amount of the metal sulfonate can be measured by measuring the amount of sulfur and metal in the polymer, and then converting the obtained value to a molar amount.

For the production of the thermoplastic polyester resin, known methods such as a direct esterification method or a transesterification method can be applied. Examples of a polycondensation catalyst used during the production of the thermoplastic polyester resin include, but are not limited to, known antimony compounds such as antimony trioxide or antimony pentoxide, germanium compounds such as germanium oxide, titanium compounds such as titanium acetate, and aluminum compounds such as aluminum chloride. Another example of the method for producing the thermoplastic polyester resin is a method of transesterifying a different type of thermoplastic polyester resin, involving a long retention time and/or high-temperature extrusion.

The thermoplastic polyester resin may comprise a small amount of diethylene glycol by-product unit, which is a dimer of an ethylene glycol component and is formed in a small amount in the step of producing a polyester resin. In order for multilayer laminates such as a multilayer plastic container to keep good physical properties, the ratio of diethylene glycol units in the thermoplastic polyester resin is preferably extremely low. The ratio of diethylene glycol-derived constituting units is preferably 3 mol % or less, and more preferably 1 to 2 mol %, based on all constituting units of the thermoplastic polyester resin.

A preferred thermoplastic polyester resin is not particularly limited, and examples of the preferred thermoplastic polyester resin include a polyethylene terephthalate resin, a polyethylene terephthalate-isophthalate copolymer resin, a polyethylene-1,4-cyclohexanedimethylene-terephthalate copolymer resin, a polyethylene-2,6-naphthalene dicarboxylate resin, a polyethylene-2,6-naphthalene dicarboxylate-tercphthalate copolymer resin, a polyethylene-terephthalate-4,4'-biphenyl dicarboxylate resin, a poly-1,3-propylene-terephthalate resin, a polybutylene terephthalate resin, a polybutylene-2,6-naphthalene dicarboxylate resin, a sodium sulfoisophthalate copolymerized polyethylene terephthalate resin, and a lithium sulfoisophthalate copolymerized polyethylene terephthalate resin. More preferred thermoplastic polyester resins include a polyethylene terephthalate resin, a polyethylene terephthalate-isophthalate copolymer resin, a polyethylene-1,4-cyclohexane dimethylene-terephthalate copolymer resin, a polybutylene terephthalate resin, a polyethylene-2,6-naphthalene dicarboxylate resin, a sodium sulfoisophthalate copolymerized polyethylene terephthalate resin, and a lithium sulfoisophthalate copolymerized polyethylene terephthalate resin. Two or more types of resins may also be used in combination, as such a thermoplastic polyester resin.

The moisture content of the thermoplastic polyester resin is preferably 200 ppm or less, and more preferably 100 ppm or less. If the moisture content is in the above-described range, the molecular weight is not extremely decreased by the hydrolysis of the polyester during molding. Also, the thermoplastic polyester resin may have been dried before it is molded into a multilayer plastic container, so that the moisture content thereof may have been decreased.

The intrinsic viscosity (the value obtained by measuring at 25°C in a mixed solvent of phenol/1,1,2,2-tetrachloroethane at a mass ratio of 60/40) of the thermoplastic polyester resin is not particularly limited. The intrinsic viscosity is generally 0.5 to 2.0 dl/g, and preferably 0.6 to 1.5 dl/g. If the intrinsic viscosity is 0.5 dl/g or more, since the molecular weight of the thermoplastic polyester resin is sufficiently high, the multilayer plastic container can express mechanical properties necessary as a structure. It is to be noted that the intrinsic viscosity is measured by the after-mentioned

measurement method.

Moreover, thermoplastic polyester resin may also comprise materials derived from a recycled polyester, a used polyester or an industrial recycled polyester (for example, a polyester monomer, a catalyst, and an oligomer).

The amount of the thermoplastic polyester resin mixed in the thermoplastic polyester resin composition is preferably 90% by mass or more, more preferably 95% by mass or more, and further preferably 97% by mass or more. In addition, it is preferably 99.99% by mass or less, more preferably 99.9% by mass or less, and further preferably 99% by mass or less, in the thermoplastic polyester resin composition.

< Oxygen absorber >

The oxygen absorber that can be used in the present invention is not particularly limited, as long as it is generally used in the present technical field. Specific examples of such an oxygen absorber include the following compounds.

(i) Oxygen-scavenging resin

Examples of the oxygen absorber that can be used herein include oxygen-scavenging resins, which are polyester-based, polyamide-based, polyolefin-based or vinyl-based polymers and the like, in which a polyolefin oligomer segment having a carbon-carbon double bond is bound to the main chain or a branched chain thereof. Examples of the polyester-based polymer include: a (co)polycondensate from alkylene glycol such as polyethylene terephthalate (PET), polybutylene terephthalate (PBT) or polyethylene naphthalate (PEN), and aromatic dibasic acid; a polycarbonate polymer consisting of carbonic acid obtained by a polycondensation reaction of bisphenol and phosgene, and dihydric phenol; and polyarylate that is a polycondensate of dibasic acid and dihydric phenol. Examples of the polyamide-based polymer include aliphatic polyamides such as nylon 6, nylon 66 or nylon 12, and aromatic polyamides such as polyxylylenediamine adipamide (MXD6). Examples of the polyolefin-based polymer include polyethylene, an ethylene-$\alpha$-olefin copolymer, poly-$\alpha$-olefin consisting of at least one type of $\alpha$-olefin, an $\alpha$-olefin-ethylene copolymer, and an ethylene-cyclic olefin copolymer. Examples of the vinyl-based polymer include an ethylene-vinyl acetate copolymer, and a partially saponified product or a completely saponified product thereof. Examples of other polymers include ethylene-$\alpha$,$\beta$-unsaturated carboxylic acid, an esterified product thereof or an ion-crosslinked product thereof, a graft-modified polyolefin resin such as an acid anhydride, polystyrene, polyacrylonitrile.

As a polyolefin oligomer to be introduced into the main chain or branched chain of the above-described polycondensate, an oligomer comprising an allylic bond [-CH = CH-CHR-] (wherein R represents a hydrogen atom, a lower alkyl group containing 1 to 6 carbon atoms, etc.) in a molecule thereof is preferable. The allylic bond is obtained, when conjugated diene or non-conjugated diene, such as isoprene, butadiene, norbornene or dicyclopentadiene, is polymerized or copolymerized with the above-described polycondensate.

The molecular weight of a polyolefin oligomer segment is largely different, depending on the type of a main structural component of an oxygen-scavenging resin, the introduction mode such as whether the segment is introduced into the main chain or it is introduced in a pendant state, the average number of oligomer segments introduced into a single molecule of the oxygen-scavenging resin, the number of carbon-carbon double bonds in the oligomer, etc. When the number of oligomer segments introduced is large, the molecular weight may be small, and when the number of oligomer segments introduced is small, the molecular weight tends to be increased. In general, the number of oligomer segments introduced into a single molecule of the oxygen-scavenging resin is less than about 5 on average, and for example, in the case of a butadiene oligomer, the oligomer having a molecular weight of approximately 1000 to 10000 can be preferably used.

An example of the method of introducing a polyolefin oligomer segment having a carbon-carbon double bond into the main chain of a polycondensate is a method of using an oligomer of a polybutadiene derivative having hydroxyl groups, carboxyl groups or amino groups at the both ends, instead of a part of raw materials for a polycondensate, such as divalent glycol, dibasic acid or diamine, thereby performing copolycondensation of a polyolefin oligomer segment having a carbon-carbon double bond to the main chain of the polycondensate.

Another example is a method of introducing a polyolefin oligomer segment having a carbon-carbon double bond in a pendant state into the side chain (branched chain) of the main chain of a polycondensate. For example, a method of using a butadiene derivative oligomer having two hydroxyl groups, carboxyl groups or amino groups at one end, instead of a part of raw materials for a polycondensate, such as divalent glycol, dibasic acid or diamine, so as to copolymerize a polyolefin oligomer segment having a carbon-carbon double bond with the branched chain of the polycondensate, is applied.

During this operation, the content of a polyolefin oligomer segment having a carbon-carbon double bond in an oxygen-scavenging resin is preferably 1% by mass or more, more preferably 2% by mass or more, and further preferably 3% by mass or more, and also, it is preferably 20% by mass or less, more preferably 10% by mass or less, and further preferably 6% by mass or less.

The method of introducing a polyolefin oligomer segment having a carbon-carbon double bond into a polycondensate is not particularly limited, and a person skilled in the art can produce a desired oxygen-scavenging resin by using a known technique.

In order to enhance the reactivity of the oxygen-scavenging resin with oxygen, it is preferable to add a catalytic amount of transition metal compound to the oxygen-scavenging resin, and then to use it.

Examples of the transition metal compound include metals selected from the first, second or third transition series of the periodic table, and the salts thereof. Preferred metals include manganese, iron, cobalt, nickel, copper, rhodium, banadium, chromium, cerium and ruthenium. Among these metals, cobalt is most preferable. Examples of the form of metal salts include chloride, acetate, stearate, palmitate, 2-ethylhexanoate, naphthenate, neodecanoate, and naphthoate, but the examples are not limited thereto. Among these metal salts, cobalt(II) 2-ethylhexanoate, cobalt(II) neodecanoate (II), cobalt(II) stearate, and cobalt(II) naphthenate are preferable. The transition metal compound is used in the range of metal amount of 0.001 to 1% by mass, and preferably 0.01 to 0.3% by mass, based on the amount of the oxygen-scavenging resin.

In addition, the oxygen-scavenging resin may comprise a photooxidation promoter in combination with the transition metal compound. Examples of the photooxidation promoter include benzophenone, o-methoxybenzophenone, acetophenone, o-methoxyacetophenone, acetonaphthenequinone, methylethyl ketone, valerophenone, hexanophenone, $\alpha$-phenylbutyrophenone, p-morpholinopropiophenone, dibenzosuberone, 4-morpholinobenzophenone, benzoin, and benzoinmethyl ether. The amount of the photooxidation promoter used is largely different, depending on the type of the oxygen-scavenging resin, and the like. In general, the photooxidation promoter can be used in the range of 0.01% to 10% by mass, and preferably 0.1% to 1% by mass, based on the amount of the oxygen-scavenging resin.

It is to be noted that the oxygen-scavenging resin is described in more detail in JP Patent Publication (Kokai) No. 2001-48182 A, and thus that this publication can be referred to.

In a preferred aspect of the present invention, from the viewpoint of moldability with the thermoplastic polyester resin, a composition comprising an oxygen-scavenging resin, in which a polyolefin oligomer segment having a carbon-carbon double bond is copolycondensed into a molecule thereof, and particularly, into the main chain of a polycondensate, and a transition metal compound, is preferably used as such an oxygen absorber. More preferably, a composition comprising an oxygen-scavenging resin, in which a polyolefin oligomer segment having a carbon-carbon double bond is copolycondensed into the main chain of a polyester-based polycondensate, and a transition metal compound, is preferably used.

As such an oxygen absorber that is a composition comprising an oxygen-scavenging resin and a transition metal compound, a commercially available product can also be used. For example, Amosorb (registered trademark) 4020 and 5105, manufactured by Colormatrix, are preferably used.

(ii) Combination of transition metal compound and oxidizable polyamide resin

As an oxygen absorber, a composition comprising a transition metal compound and an oxidizable polyamide resin can also be used.

As an oxidizable polyamide resin, the same resin as the "polyamide resin" explained in the oxygen-blocking layer can be used. Among others, an oxidizable polyamide resin having a xylylenediamine skeleton and a dicarboxylic acid skeleton is preferable, and further, a polyamide resin, in which the xylylenediamine skeleton is m-xylylenediamine and the dicarboxylic acid skeleton is dicarboxylic acid containing 6 to 10 carbon atoms, is more preferable. In particular, polyxylylenediamine adipamide (MXD6), poly-m-xylylene sebacamide (MXD10), a copolymer (MXD610) of poly-m-xylylenc adipamide and poly-m-xylylene sebacamide, or a blended body is preferably used.

Examples of the transition metal compound used herein are the same as those added to the oxygen-scavenging resin. Among such transition metal compounds, cobalt neodecanoate, cobalt stearate, cobalt palmitate, cobalt naphthenate, and the like are particularly preferable. The transition metal compound is used in the range of generally 0.1 to 20,000 ppm, preferably 1 ppm or more, more preferably 10 ppm or more, and particularly preferably 50 ppm or more, and also, it is preferably 18,000 ppm or less, more preferably 15,000 ppm or less, and particularly preferably 14,000 ppm or less, based on the total amount of the oxidizable polyamide resin and the transition metal compound.

(iii) Conjugated diene polymer cyclized product

As an oxygen absorber, a conjugated diene polymer cyclized product obtained by subjecting a conjugated diene polymer to a cyclization reaction in the presence of an acid catalyst can also be used. As conjugated diene polymers used herein, a single polymer of conjugated diene monomer, a copolymer thereof, and a copolymer of a conjugated diene monomer and a monomer copolymerizable therewith can be used.

Examples of the conjugated diene monomer include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, and 3-butyl-1,3-octadiene.

In addition, examples of other monomers copolymerizable with the conjugated diene monomer include: aromatic vinyl monomers, such as styrene, o-methylstyrene, p-methylstyrene, m-methylstyrene, 2,4-dimethylstyrene, ethylstyrene, p-tert-butylstyrene, α-methylstyrene, α-methyl-p-methylstyrene, o-chlorstyrene, m-chlorstyrene, p-chlorstyrene, p-bromostyrene, 2,4-dibromostyrene, or vinylnaphthalene; chain olefin monomers, such as ethylene, propylene, or 1-butene; cyclic olefin monomers, such as cyclopentene or 2-norbomene; non-conjugated diene monomers, such as 1,5-hexadiene, 1,6-heptadiene, 1,7-octadiene, dicyclopentadiene, or 5-ethylidene-2-norbornene; (meth)acrylic acid esters, such as methyl (meth)acrylate or ethyl (meth)acryiate; and other (meth)acrylic acid derivatives, such as (meth)acrylonitrile or (meth)acrylamide. These monomers may be used alone as a single type, or may also be used in combination of two or more types.

Specific examples of the single polymer or copolymer of conjugated diene monomers include natural rubber (NR), polyisoprene rubber (IR), polybutadiene rubber (BR), and butadiene-isoprene copolymer rubber (BIR). Among others, polyisoprene rubber and polybutadiene rubber are preferable, and polyisoprene rubber is more preferable.

Specific examples of the copolymer of a conjugated diene monomer and another monomer copolymerizable therewith include styrene-isoprene rubber (SIR), styrene-butadiene rubber (SBR), isoprene-isobutylene copolymer rubber (IIR), and ethylene-propylene-diene-based copolymer rubber (EPDM). Among others, a block copolymer having an aromatic vinyl polymer block with a weight average molecular weight of 1,000 to 500,000 and at least one conjugated diene polymer block is preferable.

The conjugated diene polymers may be used alone as a single type, or may also be used in combination of two or more types.

The content of conjugated diene monomer units in the conjugated diene polymer is not particularly limited, and it is generally 40 mol % or more, preferably 60 mol % or more, and further preferably 75 mol % or more.

The conjugated diene polymer cyclized product is obtained by subjecting a conjugated diene polymer to a cyclization reaction in the presence of an acid catalyst, so as to cyclize a conjugated diene monomer unit portion in the above-described conjugated diene polymer. The conjugated diene polymer cyclized product can be used alone as an oxygen absorber, and also, it may be used in combination with polymer materials other than conjugated diene polymer cyclized products such as thermoplastic resins. At this time, the content of the conjugated diene polymer cyclized product in the oxygen absorber is preferably 10% to 100% by weight, more preferably 20% to 90% by weight, and further preferably 30% to 85% by weight.

For details of the conjugated diene polymer cyclized product and the production method thereof, Japanese Patent No. 4569270 and Japanese Patent No. 5181671 can be referred to.

(iv) Modified polyolefin resin

Alternatively, as an oxygen absorber, a modified polyolefin resin prepared by modifying a polyolefin resin, which does not have an unsaturated ethylene bond and has tertiary carbon, with unsaturated carboxylic acid or an anhydride thereof, can also be used.

Examples of the polyolefin resin before modification include polymers including olefins containing 3 or more carbon atoms, such as propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecenc, 1-eicosene, 9-methyl-1-decene, 11-methyl-1-dodecene, or 12-ethyl-1-tetradecene.

The polyolefin resin before modification may also be a copolymer containing, for example, 50 mol % or less of constituting units, which do not have tertiary carbons such as ethylene.

Examples of the unsaturated carboxylic acid or an anhydride thereof used in the modification include: α,β-unsaturated carboxylic acids or unsaturated dicarboxylic acids, such as acrylic acid, methacrylic acid, maleic acid, fumaric acid, itaconic acid, citraconic acid, tetrahydrophthalic acid, or bicyclo[2,2,1]hept-2-ene-5,6-dicarboxylic acid; and maleic anhydride, itaconic anhydride, citraconic anhydride, tetrahydrophthalic anhydride, and bicyclo[2,2,1]hept-2-ene-5,6-dicarboxylic anhydride. Among these compounds, maleic anhydride is most preferably used.

The modified polyolefin resin preferably has an acid value of 30 mg KOH/g or more, and particularly, an acid value of 45 to 55 mg KOH/g.

Moreover, the viscosity of the modified polyolefin resin at 40°C is preferably in the range of 1 to 200 Pa·s.

In order to enhance the reactivity of the modified polyolefin resin with oxygen, it is preferable to add a catalytic amount of transition metal compound to the modified polyolefin resin, and then to use it.

As such a transition metal compound, the same transition metal compounds as those added to the oxygen-scavenging resin can be exemplified.

The transition metal compound is used in the amount range of generally 5 ppm to 3,000 ppm, preferably 50 ppm or more, and also, it is preferably 1,000 ppm or less, based on the total amount of the modified polyolefin resin and the transition metal compound.

(v) Polyvalent phenol skeleton-containing polymer compound

As oxygen absorbers other than the above-described oxygen absorbers, for example, a polymer compound having, as a skeleton, polyvalent phenol, such as a polyvalent phenol-containing phenol aldehyde resin, can be used.

(vi) Other organic oxygen absorbers

Furthermore, examples of other organic oxygen absorbers that can be used herein include quinone, glycol, phenols, caffeines, porphyrins, macrocyclic polyamines, ascorbic acid, ascorbic acid fatty acid ester, ascorbate, hydroquinone, gallic acid (+ sodium carbonate), coordinate conjugates of nitrogen-containing compounds and transition metals, such as bis-salicylaldehyde-imine cobalt, tetraethylenepentamine cobalt, a cobalt-Schiff base complex, or a polyethyleneimine-cobalt complex, a terpene compound, reaction products of amino acids and hydroxyl group-containing reducing substances, a triphenylmethyl compound, and blended products of tertiary hydrogen-containing resins and transition metals (e.g., a combination of a propylene oligomer and cobalt).

(vii) Enzyme-based oxygen absorber

Further, enzyme-base oxygen absorbers, such glucose oxidase or oxidase ascorbate, can also be used.

(viii) Oxygen absorbers expressing oxygen-absorbing ability as a result of light irradiation, heating or moisture

Further, as such oxygen absorbers, substances, which express oxygen-absorbing ability as a result of light irradiation, heating or moisture, may also be used.

Examples of the substance expressing oxygen-absorbing ability as a result of light irradiation include a photooxidation resin that expresses oxygen-absorbing ability as a result of irradiation of light such as ultraviolet ray or visible light. Examples of the photooxidation resin include an oxidizable resin such as an ethylene-based unsaturated hydrocarbon polymer, a main chain ethylene-based unsaturated hydrocarbon polymer, a polyether unit polymer, a copolymer of ethylene and cyclic alkylene, a copolymer of ethylene and distorted cyclic alkylene, a polyamide resin, an acid-modified polybutadiene and hydroxyaldehyde.

Examples of the ethylene-based unsaturated hydrocarbon polymer that can be used herein include an ethylene unsaturated hydrocarbon polymer having a molecular weight of at least 1,000, atactic-1,2-polybutadiene, ethylene-propylene rubber (EDPM), polyoctenamer, 1,4-polybutadiene, syndiotactic-1,2-polybutadiene, partially polymerized unsaturated fatty acid and ester, a block or graft copolymer, and a Hydrocite-like material.

An example of the main chain ethylene-based unsaturated hydrocarbon polymer used herein is a thermoplastic resin represented by the formula $[-CH_2-CH(CR_1 = CR_2R_3)-]$ (wherein $R_1$, $R_2$ and $R_3$ each independently represent a methyl group or a hydrogen atom), which has a number average molecular weight of 1,000 to 500,000 and contains carbon-carbon double bonds at a ratio of 0.0001 eq/g or more.

The polyether unit polymer is a polymer comprising 0.001 to 10 parts by weight of oxidation catalyst based on 1,000 parts by weight of a polymer having polyether units. The polyether unit may be a multi-block copolymer having a polyalkylene glycol ether segment as a soft segment, and at least one type of hard segment selected from the group consisting of polyester, polyamide, and polyurethane segments. The polymer having polyether units is preferably a polymer comprising, as polyether units, generally known polyether units such as aromatic polyether units or polyalkylene ether units (aliphatic polyether units). As such a polyalkylene ether unit, a polyalkylene ether unit having a number average molecular weight of 400 to 6,000 is commonly used, and the number average molecular weight of such a polyalkylene ether unit is preferably 600 to 4,000, and particularly preferably 1,000 to 3,000.

The copolymer of ethylene and cyclic alkylene is preferably an ethylene/methyl acrylate/methylcyclohexene-methyl acrylate copolymer.

Examples of the cyclic alkylene in the copolymer of ethylene and distorted cyclic alkylene include cyclopentene, cyclobutene, cycloheptene, cyclooctene, cyclononene, and cyclohexene.

An example of the polyamide resin is a polyamide resin used in the after-mentioned polyamide resin composition. Among others, preferred examples of such a polyamide resin include nylon 6,6, poly-m-xylylene adipamide, poly-m-xylylene sebacamide, poly-m-xylylene suberamide, a m-xylylene/p-xylylene adipamide copolymer, a m-xylylene/p-xylylene piperamide copolymer, and a m-xylylene/p-xylylene azelamide copolymer.

Examples of the acid-modified polybutadiene include polybutadiene, polyisoprene, a styrene-butadiene block copolymer, acrylate produced by transesterification of poly(ethylene-methyl acrylate), and polyterpene.

Preferred examples of the hydroxyaldehyde polymer include: glycolaldehyde; glyceraldehyde-aliphatic aldehydes including aliphatic saturated aldehydes such as formaldehyde, acetaldehyde, propionaldehyde, butylaldehyde or isobutylaldehyde, and aliphatic unsaturated aldehydes such as acrylaldehyde or fumaraldehyde, hydroxyaldehydes such as glycolaldehyde or glyceraldehyde, alkoxyaldehydes such as 2-methoxyethanal, oxoaldehydes such as 2-oxopropanal, aminoaldehydes such as 2-aminoethanal, halogen-substituted aldehydes such as 2-chloroethanal, alicyclic aldehydes such as cyclohexanecarbaldehyde, and aldehydes in which an aromatic ring is substituted, such as 2-phenylethanal.

Among these photooxidation resins, an ethylene/methyl acrylate/cyclohexenylmethyl acrylate terpolymer, a cyclohexenylmethyl acrylate/ethylene copolymer, a cyclohexenylmethyl acrylate/styrene copolymer, a cyclohexenyl acrylate homopolymer, or a methyl acrylate/cyclohenenylmethyl acrylate copolymer is preferable. The photooxidation resins can be used alone as a single type, or in combination of two or more types.

It is preferable to use a transition metal and a radical photopolymerization initiator, in combination with the photooxidation resin.

As such a transition metal compound, a transition metal selected from among scandium, titanium, vanadium, chromium, manganese, cobalt, nickel, tin, copper, and a mixture thereof can be used in the form of inorganic acid salts, organic acid salts, or complex salts.

Examples of the radical photopolymerization initiator include: benzoins and the alkyl ethers thereof, such as benzoin, acetonaphthenequinone, benzoin methyl ether, benzoin ethyl ether or benzoin isopropyl ether; acetophenones such as acetophenone, methylethyl ketone, valerophenone, hexaphenone, 2,2-dimethoxy-2-phenylacetophenone, 2,2-diethoxy-2-phenylacetophenone, 1,1-dichloroacetophenone, 1-hydroxychlorohexylphenyl ketone, 2-hydroxycyclohexylphenyl ketone, or 2-methyl-1-[4-(methylthio)phenyl]-2-morpholino-propan-1-one; anthraquinones such as 2,4-methylanthraquinone or 2-amylanthraquinone; thioxanthones such as 2,4-dimethylthioxanthone, 2,4-diethylthioxanthone, 2-chlorothioxanthone, or 2,4-diisopropylthioxanthone; ketals such as acetophenonedimethylketal or benzyldimethylketal; and benzophenones or xanthones, such as benzophenone. Among these compounds, benzophenone and benzoin methyl ether are particularly preferable as radical photopolymerization initiators. These radical photopolymerization initiators may also be used in combination with commonly used, known photopolymerization promoters such as benzoic acid-based or tertiary amine-based photopolymerization promoters. In addition, at least one selected from the group consisting of an $\alpha$-keto-carbonyl compound, an amine compound, a transition metal and a compound thereof, and a halogen compound, may be used in combination with the radical photopolymerization initiator.

The photooxidation resin, transition metal salts, and radical photopolymerization initiator are described in detail in JP Patent Publication (Kokai) No. 2008-81529 A, and thus, this publication can be referred to.

Another example of the substance expressing oxygen-absorbing ability as a result of light irradiation is a photooxidation-degradable resin expressing oxygen-absorbing ability as a result of irradiation with light such as ultraviolet ray or visible light. As such a photooxidation-degradable resin, a carbonyl group-containing resin is preferably used. Examples of the carbonyl group-containing resin include a styrene-carbon monoxide copolymer, an ethylene-carbon monoxide copolymer, polymethylvinyl ketone, polyethylvinyl ketone, polyisopropylvinyl ketone, polyvinylphenyl ketone, and an ethylene methylvinyl ketone copolymer. The photooxidation-degradable resin can be used alone, or in combination with a photooxidation promoter.

Examples of the photooxidation promoter that can be preferably used in combination with the photooxidation-degradable resin include an $\alpha$-keto-carbonyl compound, an amine compound, a transition metal and the organic complex salts or organic acid salts thereof, and a halogen compound.

Examples of the $\alpha$-keto-carbonyl compound that can be used herein include $\alpha$-diketone, $\alpha$-keto-aldehyde, $\alpha$-keto-carboxylic acid, and $\alpha$-keto-carboxylic acid ester.

Examples of the amine compound include dialkylaminobenzoic acid derivatives, and in particular, aldehyde, carboxylic acid or ester. Specific examples of the amine compound include 4-dimethylaminobenzaldehyde, 4-diethylaminobenzaldehyde, 4-(methylhexylarnino)benzaldehyde, 4-(methylphenylamino)benzaldehyde, 4-($\beta$-hydroxyethylmethylamino)benzaldehyde, 4-dimethylaminobenzoic acid, 4-dimethylaminobenzoic acid, 4-(methylhexylamino)benzoic acid, 4-(methylphenylamino)benzoic acid, 4-($\beta$-hydroxyethylmethylamino)benzoic acid, methyl 4-dimethylaminobenzoate, methyl 4-diethylaminobenzoate, methyl 4-dipropylaminobenzoate, methyl 4-(methylhexylamino)benzoate, methyl 4-(methylphenylamino)benzoate, propyl 4-($\beta$-hydroxyethylmethylamino)benzoate, hexyl 4-dimethylaminobenzoate, phenyl 4-dimethylaminobenzoate, 4-dimethylaminophthalic acid, 4-dimethylamnoisophthalic acid, and dimethyl 4-dimethylaminoisophthalate.

Examples of the transition metal include cobalt, iron, nickel, copper, manganese, chromium, titanium, and vanadium. These transition metals may be adequately used in the form of organic complex salts or organic acid salts, and preferred examples include acetylacetonate complex salts, $\beta$-keto acid ester complex salts, higher fatty acid salts such as stearate, linoleate or oleate, naphthenate, and dimethyl dithiocarbamate.

Examples of the halide include di- and tri-chloroacetophenone, chloroanthraquinone, chlormethylnaphihalene, and hexachlorbutadiene.

For more information about the photooxidation-degradable resin and the photooxidation promoter, JP Patent Publication (Kokai) No. 7-330042 A can be referred to.

As an oxygen absorber, a substance expressing oxygen-absorbing ability as a result of moisture can be used. Examples of such a substance expressing oxygen-absorbing ability as a result of moisture include a chelate compound

having a porphyrin ring, a combination of any one of ascorbic acid, a derivative thereof, and fatty acid, with a transition metal compound, and a combination of any one of polycarboxylic acid or a transition metal complex of salicylic acid chelate with ascorbic acid as a reducing agent.

(ix) Inorganic oxygen absorber

Moreover, as such an oxygen absorber, an inorganic oxygen absorber can also be used. Examples of such an inorganic oxygen absorber include reducing iron, reducing zinc, reducing tin, a metal lower oxide (ferrous oxide, magnetite, etc.), a reducing metal compound (iron carbide, ferrosilicon, iron carbonyl, iron hydroxide, etc.), and metal powders having reducibility, such as a mixture of two or more types of the aforementioned substances. Among others, reducing iron powders (FeO, $Fe_2O_3$, etc.) are preferable.

Such metal powders having reducibility can be used, as necessary, in combination with hydroxides of metal, such as alkaline metal or alkaline-earth metal, carbonate, sulfite, thiosulfate, tertiary phosphate, secondary phosphate, organic acid salts, or halide; or with auxiliary agents such as activated carbon, activated clay, or activated alumina. Examples of the metal halide include sodium chloride, potassium chloride, calcium chloride, zinc chloride, aluminum chloride, iron chloride, tin chloride, and a mixture of two or more types of the aforementioned compounds.

(x) Hydrogen reactive oxygen absorber

Furthermore, as such an oxygen absorber, a substance, which reacts with hydrogen co-existing in content to reduce oxygen, can also be used. An example of a compound catalyzing the reaction of oxygen with hydrogen is a compound containing germanium. In addition, hydrogen may have previously been filled into the or it may be generated after filling, by an active substance that has previously been mixed in a cap liner or the like. Preferred examples of such an active substance include metal hydride, metal, silicon hydride, and tin hydride.

The oxygen absorbers can be used alone as a single type or in combination of two or more types. The amount of the oxygen absorber used is different depending on the type of the oxygen absorber and the like. The amount of the oxygen absorber used is generally 0.01% to 3% by mass, preferably 0.1% by mass or more, more preferably 0.2% by mass or more, and further preferably 0.3% by mass or more, based on the total mass of the thermoplastic polyester resin composition. Also, the amount of the oxygen absorber used is 3% by mass or less, preferably 2% by mass or less, and more preferably 1.8% by mass or less.

Among these oxygen absorbers, in the present invention, it is preferable to use a composition comprising an oxygen-scavenging resin that is a polyester-based, polyamide-based, polyolefin-based or vinyl-based polymer, to the main chain or branched chain of which a polyolefin oligomer segment having a carbon-carbon double bond binds, and a transition metal compound, and it is more preferable to use a composition comprising an oxygen-scavenging resin that is a polyester-based polymer to which a polyolefin oligomer segment having a carbon-carbon double bond binds, and a transition metal compound. It is particularly preferable to use a composition formed by mixing transition metal salts such as organic acid cobalt into a copolymer of a thermoplastic polyester resin and polybutadiene. By using a composition comprising an oxygen-scavenging resin and a transition metal compound as an oxygen absorber, free components that are likely to influence on the flavor of content, such as oxidizable components, are suppressed to be eluted because the components are copolymerized. As a result, the influence of unpleasant taste on the content can be reduced.

When the oxygen absorber is a composition comprising an oxygen-scavenging resin and a transition metal compound, the ratio of the oxygen-scavenging resin is preferably 0.1% by mass or more, more preferably 0.2% by mass or more, and further preferably 0.3% by mass or more, based on 100% by mass of the thermoplastic polyester resin composition. Also, it is 3% by mass or less, more preferably 2% by mass or less, and further preferably 1.8% by mass or less.

Moreover, in the present invention, it is preferable to use, as an oxygen absorber, a composition comprising an oxidizable polyamide resin having a xylylenediamine skeleton and a dicarboxylic acid skeleton, and a transition metal compound, and it is more preferable to use m-xylylenediamine as such a xylylenediamine skeleton and dicarboxylic acid containing 6 to 10 carbon atoms as such a dicarboxylic acid skeleton. In particular, poly-m-xylylene adipamide is preferably used. By using, as an oxygen absorber, an oxidizable polyamide resin having a xylylenediamine skeleton and a dicarboxylic acid skeleton, free components, which are likely to influence on the flavor of content, are suppressed to be eluted because of a high-molecular-weight oxidizable form. As a result, the influence of unpleasant taste on the content can be reduced.

When the oxygen absorber is a composition comprising an oxidizable polyamide resin and a transition metal compound, the ratio of resins including the oxidizable polyamide resin is preferably 0.1% by mass or more, more preferably 0.2% by mass or more, and further preferably 0.3% by mass or more, based on the 100% by mass of the thermoplastic polyester resin composition. Also, it is 3.00% by mass or less, preferably 2% by mass or less, and more preferably 1.8%

by mass or less.

In addition, the above-described oxygen absorber may also comprise thermoplastic resins other than the oxidizable polyamide resin, as well as the transition metal compound and the oxidizable polyamide resin. Examples of such other thermoplastic resins include a polyolefin resin, a polyester resin, and a polyamide resin that does not have a xylylenediamine skeleton.

Other thermoplastic resins are mixed because if an oxidizable polyamide resin and a transition metal compound are melted and kneaded and they are handled as an integrated product, the oxidizable polyamide resin is oxidized by the transition metal compound and oxygen absorption starts, so that it becomes difficult to preserve the oxygen absorber for a long period of time, or to control oxygen-absorbing performance.

Thus, master batch 1 (MB1) consisting of a transition metal compound and another thermoplastic resin and master batch 2 (MB2) consisting of an oxidizable polyamide resin and another thermoplastic resin have previously been prepared, and immediately before molding, the master batch 1 and the master batch 2 are melted and kneaded, and the obtained mixture is preferably used as an oxygen absorber comprising a transition metal compound, an oxidizable polyamide resin and another thermoplastic resin. Otherwise, the MB1 and the MB2 may also be integrated with each other as core and sheath structures to have the state of a pellet or the like. As described above, by allowing the oxygen absorber to comprise another thermoplastic resin, as well as a transition metal compound and an oxidizable polyamide resin, the oxygen absorber can become excellent in terms of long-term preservation ability and handlability.

In this case, the mixing ratio (based on mass) between the oxidizable polyamide resin and the transition metal compound, and another thermoplastic resin, is preferably 99.9 : 0.1 to 0.1 : 99.9, more preferably 99 : 1 to 1 : 99, and particularly preferably 90 : 10 to 10 : 90.

In the present invention, the thermoplastic polyester resin composition is principally composed of a thermoplastic polyester resin and an oxygen absorber. However, other thermoplastic resins and various types of additives may also be mixed into the present thermoplastic polyester resin composition, as long as they do not impair the characteristics of the present invention.

Examples of such other thermoplastic resins include thermoplastic polyester resins such as polyethylene-2,6-naphthalene dicarboxylate, a polyolefin-based resin, polycarbonate, polyacrylonitrile, polyvinyl chloride, and polystyrene.

Examples of such additives include an impact modifier, a release agent, an ultraviolet absorber, a deodorant, a coloring agent, an anti-coloring agent, a softener, and an infrared absorption agent (reheat additive) for promoting preform heating and shortening the cycle time during molding.

The content of a metal selected from the group consisting of nickel, chromium, rhodium, ruthenium, vanadium, titanium, scandium, germanium, zinc, tin, aluminum, cobalt, iron, copper, cerium and manganese in the thermoplastic polyester resin composition constituting the oxygen-absorbing layer of the multilayer plastic container of the present invention is preferably 5 ppm or more, more preferably 20 ppm or more, and further preferably 40 ppm or more, based on the total mass of the thermoplastic polyester resin composition. Also, it is preferably 600 ppm or less, more preferably 200 ppm or less, further preferably 100 ppm or less, and particularly preferably 70 ppm or less. The content of the transition metal is desirably measured by fluorescent X-ray spectroscopy or ICP atomic emission spectroscopy. When the content value of each transition metal detected using such a device is lower than the lower detection limit of the device, it is considered that the concerned metal is substantially not comprised in the thermoplastic polyester resin composition (0 ppm).

2. Oxygen-blocking layer

In the multilayer plastic container of the present invention, the oxygen-blocking layer is a layer for preventing the entering of oxygen from outside of a container through the container wall thereof.

In the multilayer plastic container of the present invention, the oxygen-blocking layer may be a single layer, or two or more layers.

In the present invention, the oxygen-blocking layer is formed from a polyamide resin composition comprising a polyamide resin.

The polyamide resin can be used without particular limitation, as long as it has an amide bond {-NH-C(=O)-} in the repeating structural unit of a polymer main chain.

In general, the polyamide resin is obtained by the ring-opening polymerization of lactams, the polycondensation of diamine and dicarboxylic acid, the polycondensation of aminocarboxylic acid, etc., but the method of obtaining the polyamide resin is not limited thereto.

Examples of the above-described diamine include aliphatic, alicyclic and aromatic diamines. Specific examples of such diamines include tetramethylenediamine, hexamethylenediamine, undecamethylenediamine, dodecamethylenediamine, tridecamethylenediamine, 1,9-nonanediamine, 2-methyl-1,8-octanediamine, 2,2,-4-trimethylhexamethylenediamine, 2,4,4-trimethylhexamethylenediamine, 5-methylnonamethylenediamine, 1,3-bisaminomethylcyclohexane, 1,4-bisaminomethylcyclohexane, m-phenylenediamine, p-phenylenediamine, m-xylylenediamine and p-xylylenediamine.

Examples of the dicarboxylic acid include aliphatic, alicyclic and aromatic dicarboxylic acids. Specific examples of such dicarboxylic acids include adipic acid, suberic acid, azelaic acid, sebacic acid, dodecanedioic acid, 1,1,3-tridecanedioic acid, 1,3-cyclohexanedicarboxylic acid, terephthalic acid, isophthalic acid, naphthalenedicarboxylic acid, and dimer acid. Specific examples of the lactams include ε-caprolactam, enantholactam, and ω-laurolactam. Specific examples of the aminocarboxylic acid include ε-aminocaproic acid, 7-aminoheptanoic acid, 8-aminooctanoic acid, 9-aminononanoic acid, 11-aminoundecanoic acid, 12-aminododecanoic acid, and 13-aminotridecanoic acid.

Examples of the polyamide resin that can be used in the present invention include polyamide 6, polyamide 6,6, polyamide 4,6, polyamide 11, polyamide 12, polyamide 6,10, polyamide 6,12, polyamide 6/6,6, polyamide 6/6,12, polyamide MXD6, polyamide 6,T, polyamide 6,I, polyamide 6/6,T, polyamide 6/6,I, polyamide 6,6/6,T, polyamide 6,6/6,I, polyamide 6/6,T/6,I, polyamide 6,6/6,T/6,I, polyamide 6/12/6,T, polyamide 6,6/12/6,T, polyamide 6/12/6,I, polyamide 6,6/12/6,I, and polyamide 9,T. Polyamides formed by copolymerizing a plurality of polyamides using an extruder or the like can also be used.

Moreover, the polyamide resin that can be used in the present invention is preferably a polyamide resin comprising diamine units containing an aromatic diamine unit represented by the following general formula (I-1) or an alicyclic diamine unit represented by the following general formula (1-2), and dicarboxylic acid units containing a straight-chain aliphatic dicarboxylic acid unit represented by the following general formula (II-1) or an aromatic dicarboxylic acid unit represented by the following general formula (II-2).

[Formula 1]

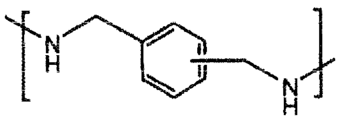
(I−1)

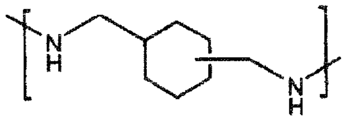
(I−2)

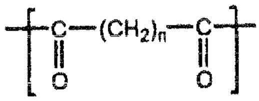
(II−1)

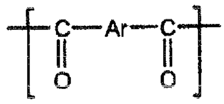
(II−2)

wherein, in the formula (II-1), n represents an integer of 2 to 18, and in the formula (II-2), Ar represents an arylene group.

However, the total of the above-described diamine units and the above-described dicarboxylic acid units does not exceed 100 mol %. In addition, the polyamide resin may further comprise constituting units other than the aforementioned units, as long as it does not impair the effects of the present invention.

The diamine units in the polyamide resin preferably comprise 50 mol % or more of the aromatic diamine unit represented by the above general formula (I-1) or the alicyclic diamine unit represented by the above general formula (I-2) therein. The content of the aromatic diamine units or the alicyclic diamine units is more preferably 70 mol % or more, further preferably 80 mol % or more, and particularly preferably 90 mol % or more. It is also possible to use the aromatic diamine units in combination with the alicyclic diamine units. In such a case, it may be adequate if the total amount of the two types of diamine units may satisfy the above-described range.

Examples of a compound capable of constituting the aromatic diamine unit represented by the general formula (I-1) include o-xylylenediamine, m-xylylenediamine, and p-xylylenediamine. These compounds can be used alone or in combination of two or more types.

Examples of a compound capable of constituting the alicyclic diamine unit represented by the general formula (I-2) include 1,2-bis(aminomethyl)cyclohexane, 1,3-bis(aminomethyl)cyclohexane, and 1,4-bis(aminomethyl)cyclohexane. These compounds can be used alone or in combination of two or more types.

Among these diamine units, from the viewpoint of facilitating the molding of a commonly used thermoplastic resin, as well as expressing excellent gas barrier properties, the polyamide resin comprises preferably 50 mol % or more of, more preferably 70 mol % or more of, further preferably 80 mol % or more of, and particularly preferably 90 mol % or more of m-xylylenediamine units.

Examples of a compound capable of constituting diamine units other than the diamine unit represented by the general formula (I-1) or (I-2) include aromatic amines such as p-phenylenediamine, aliphatic diamines such as 2-methyl-1,5-pentanediamine or 1-amino-3-aminomethyl-3,5,5-trimethylcyclohexane, and polyether diamines having an ether bond, which include, as representative examples, Jeffamine and Elastamine (both of which are product names) manufactured by Huntsman Corporation, but the examples are not limited thereto. These compounds can be used alone or in combination of two or more types.

From the viewpoint of reactivity during polymerization and the crystallinity and moldability of a polyamide compound, the dicarboxylic acid units in the polyamide resin comprise any one of the straight-chain aliphatic dicarboxylic acid unit represented by the above general formula (II-1) and the aromatic dicarboxylic acid unit represented by the above general formula (II-2) in a total amount of preferably 50 mol % or more, more preferably 70 mol % or more, further preferably 80 mol % or more, and particularly preferably 90 mol % or more. The straight-chain aliphatic dicarboxylic acid unit can also be used in combination with the aromatic dicarboxylic acid units. In such a case, it may be adequate if the total amount of the two types of units may satisfy the above-described range.

Examples of a compound capable of constituting dicarboxylic acid units other than the dicarboxylic acid unit represented by the above general formula (II-1) or (II-2) include oxalic acid, malonic acid, fumaric acid, maleic acid, 1,3-benzenediacetic acid, and 1,4-benzenediacetic acid, but the examples are not limited thereto.

The content ratio between the above-described straight-chain aliphatic dicarboxylic acid units and the above-described aromatic dicarboxylic acid units (the straight-chain aliphatic dicarboxylic acid units / the aromatic dicarboxylic acid units) in the dicarboxylic acid units of the polyamide resin is not particularly limited, and it is determined, as appropriate, depending on intended use. For example, for the purpose of increasing the glass transition temperature of the polyamide resin to decrease the crystallinity of the polyamide resin, the straight-chain aliphatic dicarboxylic acid units / the aromatic dicarboxylic acid units is preferably 0/100 to 60/40, more preferably 0/100 to 40/60, and further preferably 0/100 to 30/70, when the total of the two types of units is set at 100. On the other hand, for the purpose of decreasing the glass transition temperature of the polyamide resin to impart flexibility to the polyamide resin, the straight-chain aliphatic dicarboxylic acid units / the aromatic dicarboxylic acid units is preferably 40/60 to 100/0, more preferably 60/40 to 100/0, and further preferably 70/30 to 100/0, when the total of the two types of units is set at 100.

For the purpose of imparting to the polyamide resin, flexibility necessary as a packaging material or a packaging container, as well as imparting suitable glass transition temperature and crystallinity to the polyamide resin, the polyamide resin preferably comprises the straight-chain aliphatic dicarboxylic acid unit represented by the above general formula (II-1).

In the above general formula (II-1), n represents an integer of 2 to 18, preferably 3 to 16, more preferably 4 to 12, and further preferably 4 to 8.

Examples of a compound capable of constituting the straight-chain aliphatic dicarboxylic acid unit represented by the above general formula (II-1) include succinic acid, glutaric acid, adipic acid, pimelic acid, suberic acid, azelaic acid, sebacic acid, 1,10-decanedicarboxylic acid, 1,11-undecanedicarboxylic acid, and 1,12-dodecanedicarboxylic acid, but the examples are not limited thereto. These compounds can be used alone or in combination of two or more types.

The type of the straight-chain aliphatic dicarboxylic acid unit represented by the above general formula (II-1) is determined, as appropriate, depending on intended use. From the viewpoint of retaining the heat resistance of a packaging material or a packaging container after completion of heat sterilization, as well as imparting excellent gas barrier properties to the polyamide resin, the straight-chain aliphatic dicarboxylic acid units in the polyamide resin of the present invention comprise therein at least one selected from the group consisting of adipic acid units, sebacic acid units and 1,12-dodecanedicarboxylic acid units in a total amount of preferably 50 mol % or more, more preferably 70 mol % or more, further preferably 80 mol % or more, and particularly preferably 90 mol % or more.

From the viewpoint of the gas barrier properties of the polyamide resin and the thermal properties thereof, such as suitable glass transition temperature or melting point, the straight-chain aliphatic dicarboxylic acid units in the polyamide resin preferably comprise 50 mol % or more of adipic acid units therein. On the other hand, from the viewpoint of imparting moderate gas barrier properties and molding processing suitability to the polyamide resin, the straight-chain aliphatic dicarboxylic acid units in the polyamide resin preferably comprise 50 mol % or more of sebacic acid units therein. When the polyamide resin is used for intended use in which low water absorbency, weather resistance and heat resistance are required, the straight-chain aliphatic dicarboxylic acid units in the polyamide resin preferably comprise 50 mol % or more of 1,12-dodecanedicarboxylic acid units therein.

For the purpose of facilitating the moldability of a packaging material or a packaging container, as well as imparting further gas barrier properties to the polyamide resin, the polyamide resin preferably comprises the aromatic dicarboxylic acid unit represented by the above general formula (II-2).

In the above general formula (II-2), Ar represents an arylene group. The arylene group is an arylene containing preferably 6 to 30 carbon atoms, and more preferably 6 to 15 carbon atoms, and examples of such an arylene group include a phenylene group and naphthylene group.

Examples of a compound capable of constituting the aromatic dicarboxylic acid unit represented by the above general formula (II-2) include terephthalic acid, isophthalic acid, and 2,6-naphthalenedicarboxylic acid, but the examples are not limited thereto. These compounds can be used alone or in combination of two or more types.

The type of the aromatic dicarboxylic acid unit represented by the above general formula (II-2) is determined, as appropriate, depending on intended use. The aromatic dicarboxylic acid units in the polyamide resin comprise therein at least one selected from the group consisting of isophthalic acid units, terephthalic acid units and 2,6-naphthalenedicarboxylic acid units in a total amount of preferably 50 mol % or more, more preferably 70 mol % or more, further preferably 80 mol % or more, and particularly preferably 90 mol % or more. Moreover, among these units, the aromatic

dicarboxylic acid units preferably comprise isophthalic acid and/or terephthalic acid. The content ratio between the isophthalic acid units and the terephthalic acid units (the isophthalic acid units / the terephthalic acid units) is not particularly limited, and it is determined, as appropriate, depending on intended use. For example, from the viewpoint of keeping a moderate glass transition temperature or decreasing crystallinity, the content ratio is preferably 0/100 to 100/0, more preferably 0/100 to 60/40, even more preferably 0/100 to 40/60, and further preferably 0/100 to 30/70, when the total of the two types of units is set at 100.

In a preferred aspect of the present invention, from the viewpoint of barrier properties or mechanical physical properties, the polyamide resin is preferably polyamide (A1), which comprises diamine units comprising 70 mol % or more of the aromatic diamine unit represented by the general formula (I-1) or the alicyclic diamine unit represented by the general formula (I-2), and dicarboxylic acid units comprising at least one of the straight-chain aliphatic dicarboxylic acid unit represented by the general formula (II-1) and the aromatic dicarboxylic acid unit represented by the general formula (II-2) in a total amount of 50 mol % or more.

The number average molecular weight (Mn) of the polyamide resin is not particularly limited. In the present invention, it is preferably 5,000 or more, more preferably 10,000 or more, and further preferably 15,000 or more. On the other hand, it is preferably 50,000 or less, more preferably 45,000 or less, and further preferably 40,000 or less. When the number average molecular weight is in the above-described range, there are only a few unreacted products of polyamide, and the properties of the polyamide resin are stable. The number average molecular weight of the polyamide resin can be obtained from the quantitative values of the terminal amino group concentration and the terminal carboxyl group concentration, using the following formula:

$$\text{Number average molecular weight} = 2 \times 1{,}000{,}000 / ([NH_2] + [COOH])$$

$[NH_2]$: terminal amino group concentration (μeq/g)
[COOH]: terminal carboxyl group concentration (μeq/g)

The polyamide resin can be produced by polycondensing a diamine component capable of constituting the above-described diamine units with a dicarboxylic acid component capable of constituting the above-described dicarboxylic acid units. The degree of polymerization can be controlled by adjusting conditions for polycondensation, etc. During the polycondensation, a small amount of monoamine or monocarboxylic acid may be added as a molecular weight modifier. In addition, in order to suppress the polycondensation reaction to obtain a desired degree of polymerization, the ratio (molar ratio) between the diamine component and the carboxylic acid component, which constitute the polyamide resin, may be adjusted by deviating from 1.

Examples of the polycondensation method of the polyamide resin include, but are not limited to, a reactive extrusion method, a pressurized salt method, an atmospheric dropping method, and a pressurized dropping method. The reaction temperature is preferably as low as possible, and the polyamide resin can be thereby prevented from yellowing or gelatinization, and the polyamide resin having stable properties can be obtained.

The reactive extrusion method is a method of reacting polyamide consisting of a diamine component and a dicarboxylic acid component by fusing and kneading the components using an extruder. The raw materials used for the reactive extrusion method, namely, the diamine component and the dicarboxylic acid component may be directly poured into the extruder. Otherwise, polyamide salts or a polyamide oligomer having a number average molecular weight of 2000 or less may previously have been prepared using a polymerization vessel, and the prepared product may be then poured into the extruder. Moreover, in order to prevent degradation of polyamide, it is preferable to promote the reaction, while removing water using several stages of open vent or vacuum vent.

The pressurized salt method is a method of performing fusion polycondensation under an increased pressure, using nylon salts as raw materials. Specifically, an aqueous solution of nylon salts consisting of a diamine component and a dicarboxylic acid component is prepared, the aqueous solution is then concentrated, and the temperature of the concentrate is then increased under an increased pressure. Thereafter, polycondensation is performed, while removing the condensed water. While the inside of the can is gradually returned to an ordinary pressure, the temperature is increased to approximately the melting point of the polyamide resin +10°C, and it is then retained. Thereafter, while the pressure is gradually reduced to 0.02 MPaG, the temperature is retained as is, and the polycondensation is continuously performed. When the stirring torque reaches a certain value, the inside of the can is pressurized to approximately 0.3 MPaG with nitrogen, and the polyamide resin is recovered.

In the atmospheric dropping method, dicarboxylic acid components are heated and melted under an ordinary pressure, and diamine components are continuously added dropwise thereto. While removing condensed water, polycondensation is performed. During this operation, the polycondensation reaction is carried out, while increasing the temperature of the reaction system, so that the reaction temperature cannot be lower than the melting point of a polyamide

compound generated. Differing from the above-described pressurized salt method, since the atmospheric dropping method does not use water in which salts are to be dissolved, the yield per batch is large. Also, since this method does not require vaporization and/or condensation of raw material components, a reduction in the reaction rate rarely occurs, and a processing time can be reduced.

The pressurized dropping method is a method comprising first adding dicarboxylic acid components into a polycondensation can, then heating and melting them, and then, while preferably pressurizing the inside of the can to approximately 0.3 to 0.4 MPaG, continuously dropping diamine components, and then performing polycondensation while removing condensed water. During this operation, the polycondensation reaction is carried out, while increasing the temperature of the reaction system, so that the reaction temperature cannot be lower than the melting point of a polyamide compound generated. When the molar ratio reaches a predetermined value, the dropping of the diamine components is terminated, and while the inside of the can is gradually returned to an ordinary pressure, the temperature is increased to approximately the melting point of the polyamide resin + 10°C, and is then retained. Thereafter, while the pressure is gradually reduced to 0.02 MPaG, the temperature is retained as is, and the polycondensation is continuously performed. When the stirring torque reaches a certain value, the inside of the can is pressurized to approximately 0.3 MPaG with nitrogen, and the polyamide resin is recovered.

In the polycondensation of the polyamide resin, from the viewpoint of promoting the amidation reaction, a phosphorus atom-containing compound is preferably added.

Examples of the phosphorus atom-containing compound include phosphinic acid compounds such as dimethylphosphinic acid and phenylmethylphosphinic acid; hypophosphorous acid compounds such as hypophosphorous acid, sodium hypophosphite, potassium hypophosphite, lithium hypophosphite, magnesium hypophosphite, calcium hypophosphite, and ethyl hypophosphite; phosphonic acid compounds such as phosphonic acid, sodium phosphonate, potassium phosphonate, lithium phosphonate, potassium phosphonate, magnesium phosphonate, calcium phosphonate, phenylphosphonic acid, ethylphosphonic acid, sodium phenylphosphonate, potassium phenylphosphonate, lithium phenylphosphonate, diethyl phenylphosphonate, sodium ethylphosphonate, and potassium ethylphosphonate; phosphonous acid compounds such as phosphonous acid, sodium phosphonite, lithium phosphonite, potassium phosphonite, magnesium phosphonite, calcium phosphonite, phenylphosphonous acid, sodium phenylphosphonite, potassium phenylphosphonite, lithium phenylphosphonite, and ethyl phenylphosphonite; and phosphorous acid compounds such as phosphorous acid, sodium hydrogen phosphite, sodium phosphite, lithium phosphite, potassium phosphite, magnesium phosphite, calcium phosphite, triethyl phosphite, triphenyl phosphite, and pyrophosphorous acid.

Among these compounds, hypophosphorous acid metal salts, such as sodium hypophosphite, potassium hypophosphite and lithium hypophosphite, are particularly preferably used because these compounds have a high effect of promoting the amidation reaction and are also excellent in terms of an anti-coloring effect. Among others, sodium hypophosphite is particularly preferable. It is to be noted that the phosphorus atom-containing compounds that can be used in the present invention are not limited to these compounds.

The additive amount of the phosphorus atom-containing compound is preferably 0.1 to 1000 ppm, more preferably 1 to 600 ppm, and further preferably 5 to 400 ppm, relative to the concentration of phosphorus atoms in the polyamide compound. If the additive amount of the phosphorus atom-containing compound is 0.1 ppm or more, the polyamide compound is hardly colored during the polymerization, and transparency is thereby increased. On the other hand, if it is 1000 ppm or less, the polyamide compound is hardly gelatinized, and the mixing of fisheyes into a molded product, which may be caused by the phosphorus atom-containing compound, can be reduced, and thereby, the molded product has good appearance.

Furthermore, it is preferable to add an alkali metal compound, together with the aforementioned phosphorus atom-containing compound, into the polycondensation system of the polyamide resin. In order to prevent the coloration of the polyamide compound during the polycondensation, it is necessary to add a sufficient amount of phosphorus atom-containing compound into the reaction system. However, such addition of a sufficient amount of phosphorus atom-containing compound is likely to provoke gelatinization of the polyamide compound in some cases. Accordingly, in order to adjust the amidation reaction rate as well, it is preferable to allow an alkali metal compound to coexist with the phosphorus atom-containing compound.

Preferred examples of the alkali metal compound include an alkali metal hydroxide, an alkali metal acetate, an alkali metal carbonate, and an alkali metal alkoxide. Specific examples of the alkali metal compound that can be used in the present invention include, but are not limited to, lithium hydroxide, sodium hydroxide, potassium hydroxide, rubidium hydroxide, cesium hydroxide, lithium acetate, sodium acetate, potassium acetate, rubidium acetate, cesium acetate, sodium methoxide, sodium ethoxide, sodium propoxide, sodium butoxide, potassium methoxide, lithium methoxide, and sodium carbonate. From the viewpoint of controlling the polymerization rate and reducing the yellowness index, the ratio between the phosphorus atom-containing compound and the alkali metal compound is preferably in the range of the phosphorus atom-containing compound / the alkali metal compound = 1.0/0.05 to 1.0/1.5, more preferably 1.0/0.1 to 1.0/1.2, and further preferably 1.0/0.2 to 1.0/1.1.

In the present invention, other polyamide resins, which do not comprise m-xylylenediamine units as diamine

units, may be mixed into the polyamide resin composition. Examples of such other polymer resins include nylon 6, nylon 6,6, a nylon 6/6,6 copolymer, nylon 6,10, nylon 11, nylon 12, and nylon 13.

The total amount of polyamide resins mixed into the polyamide resin composition is preferably 55.1% by mass or more, more preferably 60.1% by mass or more, and further preferably 65.1% by mass or more. On the other hand, it is preferably 99.99% by mass or less, more preferably 99.9% by mass or less, and further preferably 99.8% by mass or less, in the polyamide resin composition.

Among these polyamide resins, the amount of the polyamide resin comprising m-xylylenediamine units mixed into the polyamide resin composition is preferably 55% by mass or more, more preferably 60% by mass or more, and further preferably 65% by mass or more. On the other hand, it is preferably 99.9% by mass or less, more preferably 99% by mass or less, and further preferably 97% by mass or less, in the polyamide resin composition.

Moreover, the amount of other polyamide resins, which do not comprise m-xylylenediamine units, mixed into the polyamide resin composition is preferably 0.1% by mass or more, more preferably 1% by mass or more, and further preferably 3% by mass or more. On the other hand, it is preferably 45% by mass or less, more preferably 40% by mass or less, and further preferably 35% by mass or less, in the polyamide resin composition.

In the present invention, the polyamide resin composition may comprise various types of additives, as long as the additives do not impair the characteristics of the present invention. For example, one or more types of other resins, such as polyester, polyolefin or a phenoxy resin, can be blended into the present polyamide resin composition. Examples of such additives include: inorganic fillers such as glass fibers and carbon fibers; plate-like inorganic fillers such as glass flake, talc, kaolin, mica, montmorillonite and organoclay; impact modifiers and nucleating agents, such as various types of elastomers; lubricants such as fatty acid amide-based and fatty acid amide-based compounds; antioxidants, such as organic or inorganic halogen compounds, hindered phenol-based, hindered amine-based, hydrazine-based and sulfur-based compounds, and phosphorus-based compounds; and additives, including anti-coloring agents, ultraviolet absorbers such as benzotriazole-based compounds, release agents, plasticizers, coloring agents, ultraviolet absorbers, infrared absorption agents (reheat additives) for promoting the heating of a preform to reduce the cycle time during molding, and flame retardants.

From the viewpoint of preventing generation of burnt deposits during container molding, it is preferable that a metal selected from the group consisting of cobalt, copper, cerium, aluminum and manganese is substantially not comprised in the polyamide resin composition constituting the oxygen-blocking layer. That is to say, the content of such a transition metal selected from the group consisting of cobalt, copper, cerium, aluminum and manganese in the polyamide resin composition is less than 10 ppm, preferably less than 5 ppm, more preferably less than 3 ppm, further preferably less than 1 ppm, and particularly preferably less than 0.1 ppm, based on the total mass of the polyamide resin composition. It is to be noted that a transition metal selected from iron, chromium and nickel may be transferred into the oxygen-blocking layer at a content ratio of 10 ppm or more, when structural materials for a molding machine, such as a screw or a metal mold, are allowed to come into contact with a molten resin during a molding operation, unless the transition metal is intentionally mixed into the resin composition. The risk of such a metal giving effects on generation of burnt deposits is substantially lower than the risk of the above-described transition metal. A clear reason therefor is unknown, but it is considered that a metal selected from iron, chromium and nickel has the activity of catalyzing the decomposition reaction of a polyamide resin that causes generation of burnt deposits, which is lower than that of a metal selected from the group consisting of cobalt, copper, cerium, aluminum and manganese, or it is also considered that such a metal may be inevitably comprised in a certain amount after the production process, the influence of such a metal is hardly distinguished and recognized from the case in which such a metal is not completely comprised. The content of a metal selected from the group consisting of iron, chromium and nickel in the polyamide resin composition is preferably less than 200 ppm, and particularly preferably less than 100 ppm, based on the total mass of the polyamide resin composition. The content of the transition metal is desirably measured by fluorescent X-ray spectroscopy or ICP atomic emission spectroscopy. When the value detected as the content of each transition metal using the aforementioned device is lower than the lower detection limit of the device, it is considered that the metal is substantially not comprised in the polyamide resin composition (which is 0 ppm).

As mentioned above, the multilayer plastic container of the present invention is characterized in that it has at least one oxygen-absorbing layer and at least one oxygen-blocking layer, and in that at least one of the oxygen-absorbing layers is arranged on a side more inside than the oxygen-blocking layer. Since the present multilayer plastic container has at least one of the oxygen-absorbing layers that is arranged on a side more inside than the oxygen-blocking layer, the oxygen-blocking layer can block oxygen that enters from the outside, and the oxygen-absorbing layer arranged in the inner layer side can efficiently absorb oxygen remaining in the container, without reduction in its oxygen-absorbing performance, Moreover, even a trace amount of oxygen that has permeated through the oxygen-blocking layer can be absorbed by the oxygen-absorbing layer arranged in the inner layer side, and thus, the degradation of content and reduction in flavor such as aroma, which are caused by oxygen, can be effectively prevented. Furthermore, by establishing an oxygen-blocking layer that is substantially transition metal-free, and by further establishing an oxygen-absorbing layer inside of the oxygen-blocking layer, the use amount of the oxygen absorber mixed into the oxygen-absorbing layer can

be reduced in the container as a whole.

The layer structure of the multilayer plastic container of the present invention is not particularly limited, as long as the present multilayer plastic container has at least one oxygen-absorbing layer and at least one oxygen-blocking layer, as described above, and at least one of the oxygen-absorbing layers is arranged on a side more inside than the oxygen-blocking layer. For example, the multilayer plastic container of the present invention may also have layers other than the above-described oxygen-absorbing layer and oxygen-blocking layer (including an adhesive layer, a protecting layer, a barrier coating layer, a printing layer, etc.), as long as they do not impair the purpose of the present invention.

In a preferred aspect of the present invention, the multilayer plastic container of the present invention preferably has a three-layer structure of oxygen-absorbing layer 1/oxygen-blocking layer 2/oxygen-absorbing layer 3 (wherein the layers are arranged in this order from the inside of the container to the outside thereof) as shown in Figure 1, or a five-layer structure of oxygen-absorbing layer 1/oxygen-blocking layer 2/oxygen-absorbing layer 3/oxygen-blocking layer 4/oxygen-absorbing layer 5 (wherein the layers are arranged in this order from the inside of the container to the outside thereof) as shown in Figure 2. Since the multilayer plastic container of the present invention has the above-described layer structure, it can effectively prevent the entering of oxygen from outside of the container, and also can efficiently absorb oxygen remaining in the container.

When there are two or more oxygen-absorbing layers, the compositions of the oxygen-absorbing layers may be identical to or different from one another. For example, when two or more oxygen-absorbing layers are present, the composition of a dicarboxylic acid component or a diol component constituting a thermoplastic polyester resin in each oxygen-absorbing layer may be changed. Or, the type or mixed amount of an oxygen absorber in each oxygen-absorbing layer may be changed. Otherwise, different compositions may be created by mixing additives or changing the amounts of such additives. For example, the amount of an ultraviolet absorber or a coloring agent may be increased only in the outermost oxygen-absorbing layer.

On the other hand, when there are two or more oxygen-blocking layers, the compositions of the oxygen-blocking layers may be identical to or different from one another. For example, when two or more oxygen-blocking layers are present, the composition of a diamine component or a dicarboxylic acid component constituting a polyamide resin in each oxygen-blocking layer may be changed. Otherwise, different compositions may be created by blending two or more types of polyamide resins, or by mixing additives or changing the amounts of such additives.

From the viewpoint of the moldability of the multilayer plastic container, the oxygen-absorbing layers and the oxygen-blocking layers each preferably have a single composition.

In the multilayer plastic container of the present invention, the thickness of each oxygen-absorbing layer is preferably 0.01 μm or more, more preferably 0.05 μm or more, and further preferably 0.05 μm or more, and also, it is preferably 2.0 μm or less, more preferably 1.5 μm or less, and further preferably 1.0 μm or less.

In addition, the thickness of each oxygen-blocking layer is preferably 0.005 μm or more, more preferably 0.01 μm or more, and further preferably 0.02 μm or more, and also, it is preferably 0.2 μm or less, more preferably 0.15 μm or less, and further preferably 0.1 μm or less.

It is to be noted that the thickness of the multilayer plastic container is not necessarily constant in the container as a whole, and in general, it is preferably in the range of 0.2 to 4.0 mm.

Moreover, in the multilayer plastic container of the present invention, the ratio (mass ratio) of all of the oxygen-absorbing layers is preferably 80% by mass or more, more preferably 85% by mass or more, and further preferably 90% by mass or more, and also it is preferably 99% by mass or less, more preferably 98% by mass or less, and further preferably 97% by mass or less, based on the total mass of the multilayer plastic container. The ratio (mass ratio) of all of the oxygen-blocking layers is preferably 1% by mass or more, more preferably 2% by mass or more, and further preferably 3% by mass or more, and also, it is preferably 20% by mass or less, more preferably 15% by mass or less, and further preferably 10% by mass or less, based on the total mass of the multilayer plastic container.

By setting the ratios of the oxygen-absorbing layers and the oxygen-blocking layers in the above-descibed ranges, a multilyer plastic container having good gas barrier properties can be obtained.

The shape of the multilayer plastic container of the present invention is not particularly limited, and the present multilayer plastic container can have any given shape such as a bottle, a deep drawing container, or a cup-shaped container. Among these shapes, any given shpe obtained by subjecting preform to stretch blowing is preferable, and a common plastic bottle shape is particularly preferable.

In a preferred aspect of the present invention, the multilayer plastic container of the present invention is obtained, for example, using an injection molding machine having two injection cylinders. That is, the present multilayer plastic container is obtained by injecting a polyester resin composition from an injection cylinder on the skin side, and a polyamide resin composition from an injection cylinder on the core side, both through a mold hot runner into a mold cavity, so as to mold a multilayer preform, and then, further subjecting the obtained multilayer preform to biaxial stretch blow molding according to a known method. According to this method, any given bottle-shaped multilayer plastic container can be obtained.

As such a method of subjecting a multilayer preform to biaxial stretch blow molding, generally known methods

such as, what are called, a cold parison method and a hot parison method, can be used. For example, there is applied a blow molding method which comprises heating the surface of a multilayer preform to a temperature of 80°C to 120°C, then stretching the heated preform in the axial direction by mechanical means such as pushing with a core rod insert, and then blowing high pressure air of generally 2 to 4 MPa to the preform to stretch it in the horizontal direction, thereby performing blow molding. Otherwise, there is also applied a blow molding method which comprises crystallizing the mouth of a multilayer preform, then heating the surface to a temperature of 80°C to 120°C, and then performing blow molding on the preform in a mold with a temperature of 90°C to 150°C.

The heating temperature of the multilayer preform is generally 80°C to 120°C, and preferably 90°C to 110°C. If the heating temperature of the multilayer preform is lower than 80°C, heating becomes insufficient, and thus, the oxygen-absorbing layer or the oxygen-blocking layer is subjected to cold stretching, and thereby it may be whitened. On the other hand, if the heating temperature is higher than 120°C, the oxygen-blocking layer is crystallized and is unfavorably whitened. Moreover, anti-delamination performance may also be reduced.

For instance, a multilayer plastic container having a three-layer structure or a five-layer structure can be obtained by subjecting a multilayer preform having a three-layer structure or a five-layer structure to biaxial stretch blow molding according to a known method.

The method for producing such a multilayer preform having a three-layer structure or a five-layer structure is not particularly limited, and a known method can be applied. For example, a polyester resin composition is first injected by a step of injecting a polyester resin composition constituting an oxygen-absorbing layer from an injection cylinder on the skin side and injecting a polyamide resin composition constituting an oxygen-blocking layer from an injection cylinder on the core side, and then, the polyamide resin composition and the polyester resin composition are simultaneously injected, and thereafter, a necessary amount of the polyester resin composition is injected, so as to fill a mold cavity with such compositions, thereby producing a multilayer preform having a three-layer structure (an oxygen-absorbing layer / an oxygen-blocking layer / an oxygen-absorbing layer).

Alternatively, a polyester resin composition is first injected by a step of injecting a polyester resin composition from an injection cylinder on the skin side and injecting a polyamide resin composition from an injection cylinder on the core side, and then, a polyamide resin composition is injected alone, and finally, a polyester resin composition is injected, so as to fill a mold cavity with such components, thereby producing a multilayer preform having a five-layer structure (an oxygen-absorbing layer / an oxygen-blocking layer / an oxygen-absorbing layer / an oxygen-blocking layer / an oxygen-absorbing layer).

The methods for producing a multilayer preform are not limited to the above-described methods, and a person skilled in the art could produce a multilayer preform having a desired multilayer structure, while referring to the above-described methods.

In another preferred aspect of the present invention, the multilayer plastic container of the present invention may be processed into a desired shape by forming a multilayer sheet according to a conventionally known method (an extrusion lamination method, a co-extrusion method, a fusion method of utilizing heat, etc.), and then subjecting the sheet to thermoforming. By this method, a multilayer plastic container having any given deep drawing shape or cup shape can obtained.

As a method for producing a multilayer sheet, a co-extrusion method is preferable in terms of production efficiency. The co-extrusion method is a method of using two or more extruders, which comprises laminating an oxygen-absorbing layer on both surfaces of an oxygen-blocking layer in a multi-manifold die, before extruding the oxygen-blocking layer from a die lip, and then simultaneously extruding the two types of layers from the die lip to obtain a multilayer sheet that is a precursor of the multilayer plastic container of the present invention.

Examples of the method of thermoforming the obtained multilayer sheet include general vacuum molding and pressure forming, but the examples are not limited thereto.

In the multilayer structure of the multilayer plastic container of the present invention, the oxygen-absorbing layers may be allowed to come into contact with each other at least in a portion. That is, the oxygen-blocking layer may be a discontinuous layer. For example, when the multilayer plastic container of the present invention has a bottle shape, as shown in Figure 3, the oxygen-blocking layer may be present at least in a waist portion (that is, the container has a three-layer structure of oxygen-absorbing layer I/oxygen-blocking layer 2/oxygen-absorbing layer 1 in a waist portion thereof), and the oxygen-blocking layer may not necessarily be stretched up to around the tip of a mouth part or around a bottom part.

Moreover, the oxygen-blocking layer may not be necessarily a continuous layer even in a waist portion, and it may also be a discontinuous layer as long as it does not largely impair gas barrier properties. For instance, a multilayer plastic container, in which a region containing an oxygen-blocking layer and a region containing no such oxygen-blocking layers are arranged repeatedly in a banded or strip form in a waist portion, so as to enhance delamination-preventing effects, is also desirable. When the oxygen-blocking layer is stretched up to around the tip of a mouth part, the oxygen-blocking layer preferably comprises a diamide compound and/or a diester compound. Thereby, when the bottle is preserved, an increase in the whitening of a portion with a small stretching magnification from the bottle mouse part to

the shoulder part, namely, an increase in the haze value can be suppressed by progression of crystallization of the polyamide resin.

The same applies to a case where the multilayer plastic container of the present invention is a deep drawing container, a cup-shaped container, or the like.

The multilayer plastic container of the present invention prevents the entering of oxygen from outside of the container into the container, and also absorbs oxygen remaining in the container and oxygen from outside of the container that has permeated the wall of the container, so that it can effectively prevent the degradation of content and a reduction in flavor such as taste or aroma, which are caused by oxygen.

By establishing an oxygen-blocking layer that is substantially transition metal-free, and by further establishing an oxygen-absorbing layer inside of the oxygen-blocking layer, the multilayer plastic container of the present invention can reduce the use amount of an oxygen absorber comprised in the oxygen-absorbing layer arranged in the inner layer side. Thus, while reducing the amount of an oxygen absorber used in the container as a whole, in comparison to a conventional high barrier container, the multilayer plastic container of the present invention can exhibit gas barrier properties that are equivalent to or higher than those of the high barrier container. Moreover, since the oxygen-blocking layer is substantially transition metal-free, generation of burnt deposits during the molding of the container or the yellowing of a resin component during recycling can be prevented. According to a preferred aspect of the present invention, by adopting the aforementioned structure, when the present multilayer plastic container comprises transition metal in an amount equivalent to that of the conventional high barrier container, it can exhibit gas barrier properties higher than those of the conventional high barrier container. Furthermore, even if the content of such a transition metal in the present multilayer plastic container is smaller than that of the conventional high barrier container, the present multilayer plastic container can exhibit excellent gas barrier properties that are equivalent to those of the conventional high barrier container.

Further, according to a preferred aspect of the present invention, the multilayer plastic container of the present invention hardly has delamination caused by dropping or impact, and even if the present multilayer plastic container has a shape comprising an uneven portion or a bended portion, delamination hardly occurs. As such, the shape of the multilayer plastic container is not limited to shapes comprising a few uneven portions or bended portions, and thus, the present multilayer plastic container has high flexibility in the design.

The multilayer plastic container of the present invention can be preferably used to store and preserve various products, for example, including: liquid beverages such as carbonated beverage, juice, water, milk, Japanese *sake*, whisky, distilled beverage (*Shochu*), coffee, tea, jelly beverage, or health drink; condiments such as seasoning liquid, source, soy source, dressing, or liquid stock; liquid-based food products such as liquid soup; various types of solid-based food products; liquid or solid pharmaceutical products or quasi-drugs; and cosmetic products such as cosmetic lotion, cosmetic emulsion, hairdressing, hair dye, or shampoo.

## Examples

Hereinafter, the present invention will be more specifically described in the following examples and comparative examples. However, these examples are not intended to limit the scope of the present invention.

### (1) Number of burnt deposits generated

Using an injection molding machine having two injection cylinders (manufactured by Sumitomo Heavy Industries, Ltd., model: DU130CI) and two molds (manufactured by Kortec, model), a three-layer preform (27 g) consisting of an oxygen-absorbing layer/an oxygen-blocking layer/an oxygen-absorbing layer, or a monolayer preform (27 g), was subjected to 2500 shots of injection molding under the below-mentioned conditions, so as to produce a preform. The shape of the preform was a whole length of 95 mm, an outer diameter of 22 mm, and a thickness of 4.2 mm. Among the obtained preforms, the number of preforms comprising burnt deposits was counted.

Conditions for molding the three-layer and monolayer preforms are as shown below. In order to promote the deterioration of resin, the temperature of an injection cylinder on the core side (inner layer side) and the temperature of a resin flow channel in a mold were set higher than usual.

| | |
|---|---|
| Skin-side injection cylinder temperature: | 280°C |
| Core-side injection cylinder temperature (only the three-layer): | 290°C |
| Temperature of resin flow channel in mold: | 290°C |
| Mold cooling water temperature: | 15°C |
| Cycle time: | 40 s |

(2) Gas barrier properties

The preform obtained in (1) above was subjected to biaxial stretch blow molding using a blow molding apparatus (EFB1000ET, manufactured by Frontier) to obtain a petaloid-shaped bottle. The bottle had an entire length of 223 mm, an outer diameter of 65 mm, internal volume of 500 mL, and it had a petaloid-shaped bottom portion and a waist portion without dimples. For the biaxial stretch blow molding, a blow molding machine (model: EFB1000ET) manufactured by Frontier was used. Conditions for biaxial stretch blow molding are as follows.

| | |
|---|---|
| Preform heating temperature: | 108°C |
| Pressure for stretching rod: | 0.5 MPa |
| Primary blowing pressure: | 0.7 MPa |
| Secondary blowing pressure: | 2.5 MPa |
| Primary blowing delay time: | 0.34 sec |
| Primary blowing time: | 0.30 sec |
| Secondary blowing time: | 2.0 sec |
| Blowing evacuation time: | 0.6 sec |
| Mold temperature: | 30°C |

Using the same bottle as described above, the bottle was preserved at an internal humidity of 100%, an external humidity of 50% and temperature of 23°C for 180 days in accordance with ASTM D3985, and thereafter, an oxygen permeation test was carried out according to an MOCON method. For the measurement, OX-TRAN2/61 manufactured by MOCON was used. The smaller the obtained numerical value, the smaller the amount of oxygen permeated, and the more excellent gas barrier properties that could be obtained.

(3) Flavor

The bottle obtained in (2) above was filled with distilled water that had been heated to 70°C, and it was then preserved at 40°C for 2 months. Thereafter, a sensory evaluation was carried out on the preserved bottle, using six panelists. A case where a polyethylene terephthalate monolayer bottle was filled with distilled water was defined as a reference, and the flavor of the distilled water was evaluated by 3 stages, namely, "good," "slightly poor," and "poor."

(4) Waist haze (haze value)

The waist portion of the bottle obtained in (2) above was cut out, and the waist haze of the cut waist portion was measured in accordance with JIS K-7105, using a haze value measuring apparatus (model: COH-300A) manufactured by Nippon Denshoku Co., Ltd. In the case of a multilayer bottle, individual layers were comprehensively measured in order to avoid the peeling of each layer.

(5) Transition metal content

The waist portion of the bottle obtained in (2) above was cut out, and an oxygen-blocking layer was separated from an oxygen-absorbing layer. Thereafter, each layer was subjected to a scanning X-ray fluorescence analyzer ZSX primus II (manufactured by Rigaku Corporation, measurement model: thin film, without substrates), so that the X-ray intensity of each element was measured, and the content of each element was then quantified using semi-quantitative analysis software (SQX).

< Production Example 1 of oxygen absorber >

A mixture obtained by the dry blending of 750 g of isophthalic acid copolymerized polyethylene terephthalate (polyethylene terephthalate-isophthalate copolymer resin, PET-1; manufactured by Japan Unipet Co., Ltd., trade name "UNIPET BK-2180," cobalt content: 170 ppm) and 4250 g of poly-m-xylylene adipamide (manufactured by MITSUBISHI GAS CHEMICAL COMPANY, INC., MX nylon S6007) was melted and kneaded at a heater temperature of 260°C, using a 37 mmφ biaxial extruder equipped with a vacuum vent mechanism. The obtained strand was cooled with water and was the pelletized. The obtained pellets were dried at 150°C for 8 hours, using a vacuum dryer, to obtain pellets (a). Subsequently, while cobalt stearate (manufactured by KANTO KAGAKU) was supplied to the "UNIPET BK-2180" at a supplying rate of 95/5 parts by weight, using each different feeders, the mixture was extruded and dried in the same

manner as that for the pellets (a), so as to obtain pellets (b). The pellets (a) and the pellets (b) were dry-blended to result in the pellets (a)/the pellets (b) of 80%/20% by weight, thereby obtaining oxygen-absorbing pellets (A) (OA-2) serving as an oxygen absorber. The total content of cobalt in the oxygen-absorbing pellets (A) (OA-2) was 9889 ppm.

< Example 1 >

Using the materials shown in Table 1, a preform was produced under the conditions described in (1) above, and the produced preform was then subjected to biaxial stretch blow molding under the conditions described in (2) above, so as to obtain a petaloid-shaped bottle having a three-layer structure consisting of an oxygen-absorbing layer/an oxygen-blocking layer/an oxygen-absorbing layer.

As such an oxygen-absorbing layer, isophthalic acid copolymerized polyethylene terephthalate (PET-1; manufactured by Japan Unipet Co., Ltd., trade name "UNIPET BK-2180," intrinsic viscosity = 0.83 dl/g) and cobalt salt-containing polybutadiene copolymerized polyethylene terephthalate (OA-1; manufactured by Colormatrix, Amosorb (registered trademark) 4020) were blended with each other at the composition shown in Table 1, and were then used.

As such an oxygen-blocking layer, poly-m-xylylene adipamide (N-MXD6; manufactured by MITSUBISHI GAS CHEMICAL COMPANY, INC., MX nylon S6007) was used at the composition shown in Table 1.

The oxygen-absorbing layer and the oxygen-blocking layer were quantified in terms of a transition metal content. In addition, the obtained bottle was evaluated in terms of the number of burnt deposits generated, gas barrier properties, flavor, and waist haze.

< Example 2 >

A petaloid-shaped bottle was obtained in the same manner as that of Example 1, with the exception that poly-m-xylylene adipamide (manufactured by MITSUBISHI GAS CHEMICAL COMPANY, INC., MX nylon S6007) and 6-nylon (N6; manufactured by Ube Industries, Ltd., UBE nylon 1024B) were blended at a mass ratio of 70/30 and the thus blended product was used as an oxygen-blocking layer. The obtained bottle was evaluated in terms of the content of a transition metal, the number of burnt deposits generated, gas barrier properties, flavor, and waist haze.

< Examples 3 and 4 >

A petaloid-shaped bottle was obtained in the same manner as that of Example 1, with the exception that isophthalic acid copolymerized polyethylene terephthalate (PET-1) and polybutadiene copolymerized polyethylene terephthalate (OA-1) were used at the amount ratio shown in Table 1. The obtained bottle was evaluated in terms of the content of a transition metal, the number of burnt deposits generated, gas barrier properties, flavor, and waist haze.

< Examples 5 and 6 >

A petaloid-shaped bottle was obtained in the same manner as that of Example 1, with the exception that isophthalic acid copolymerized polyethylene terephthalate (PET-1) and oxygen-absorbing pellets (A) (OA-2) were used at the amount ratio shown in Table 1. The obtained bottle was evaluated in terms of the content of a transition metal, the number of burnt deposits generated, gas barrier properties, flavor, and waist haze.

< Comparative Example 1>

A petaloid-shaped bottle was obtained in the same manner as that of Example 1, with the exception that an oxygen absorber was not used in oxygen-absorbing layer. The obtained bottle was evaluated in terms of the content of a transition metal, the number of burnt deposits generated, gas barrier properties, flavor, and waist haze.

< Comparative Example 2 >

A petaloid-shaped bottle was obtained in the same manner as that of Example 1, with the exceptions that an oxygen absorber was not used in oxygen-absorbing layer, and that poly-m-xylylene adipamide (manufactured by MITSUBISHI GAS CHEMICAL COMPANY, INC., MX nylon S6007) and cobalt stearate (manufactured by KANTO KAGAKU) were blended at a mass ratio of 99.8/0.2 and the blended product was used as an oxygen-blocking layer. The obtained bottle was evaluated in terms of the content of a transition metal, the number of burnt deposits generated, gas barrier properties, flavor, and waist haze.

< Comparative Example 3 >

A monolayer petaloid-shaped bottle was obtained in the same manner as that of Example 1, with the exception that isophthalic acid copolymerized polyethylene terephthalate (manufactured by Japan Unipet Co., Ltd., trade name "UNIPET BK-2180," intrinsic viscosity = 0.83 dl/g) and cobalt salt-containing polybutadiene copolymerized polyethylene terephthalate (manufactured by Colormatrix, Amosorb (registered trademark) 4020) were blended at the composition shown in Table 1 and the blended product was used as an oxygen-absorbing layer to produce a monolayer preform. The obtained bottle was evaluated in terms of the content of a transition metal, the number of burnt deposits generated, gas barrier properties, flavor, and waist haze.

< Comparative Example 4 >

A monolayer petaloid-shaped bottle was obtained in the same manner as that of Comparative Example 3, with the exception that the mixed amounts of isophthalic acid copolymerized polyethylene terephthalate and cobalt salt-containing polybutadiene copolymerized polyethylene terephthalate were changed to the amounts shown in Table 1. The obtained bottle was evaluated in terms of the content of a transition metal, the number of burnt deposits generated, gas barrier properties, flavor, and waist haze.

< Comparative Example 5 >

A monolayer petaloid-shaped bottle was obtained in the same manner as that of Comparative Example 3, with the exception that the mixed amounts of isophthalic acid copolymerized polyethylene terephthalate and oxygen-absorbing pellets (A) (OA-2) were changed to the amounts shown in Table 1. The obtained bottle was evaluated in terms of the content of a transition metal, the number of burnt deposits generated, gas barrier properties, flavor, and waist haze.

Evaluation results are shown in Table 1.

[Table 1]

| | | | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|
| Oxygen-absorbing layer (X) | PET-1 | | Mass % | 94.75 | 94.75 | 94.5 | 93.5 | 94.5 | 93.5 | 95 | 95 | 99.75 | 97.5 | 96 |
| | OA-1 | | Mass % | 0.25 | 0.25 | 0.5 | 1.5 | | | | | 0.25 | 2.5 | |
| | OA-2 | | Mass % | | | | | 0.5 | 1.5 | | | | | 4 |
| | Content of transition metal | Co | ppm | 5 | 5 | 8 | 24 | 61 | 178 | ND | ND | 5 | 35 | 490 |
| | | Cu | ppm | ND | ND | ND | ND | ND | ND | ND | ND | ND | ND | ND |
| | | Ce | ppm | ND | ND | ND | ND | ND | ND | ND | ND | ND | ND | ND |
| | | Al | ppm | ND | ND | ND | ND | ND | ND | ND | ND | ND | ND | ND |
| | | Mn | ppm | ND | ND | ND | ND | ND | ND | ND | ND | ND | ND | ND |
| Oxygen-blocking layer (Y) | N-MXD6 | | Mass % | 5 | | 5 | 5 | 5 | 5 | 5 | | | | |
| | N-MXD6/StCo=99.8/0.2wt% | | Mass % | | | | | | | | 5 | | | |
| | N-MXD6/N6=70/30wt% | | Mass % | | 5 | | | | | | | | | |
| | Content of transition metal | Co | ppm | ND | ND | ND | ND | ND | ND | ND | 378 | - | - | - |
| | | Cu | ppm | ND | ND | ND | ND | ND | ND | ND | ND | - | - | - |
| | | Ce | ppm | ND | ND | ND | ND | ND | ND | ND | ND | - | - | - |
| | | Al | ppm | ND | ND | ND | ND | ND | ND | ND | ND | - | - | - |
| | | Mn | ppm | ND | ND | ND | ND | ND | ND | ND | ND | - | - | - |
| Layer configuration | | | | X/Y/X | X/Y/X | X/Y/X | X/Y/X | X/Y/X | X/Y/X | X/Y/X | X/Y/X | X | X | X |
| Gas barrier properties | | | cc/bottle·day·atm | 0.005 | 0.009 | 0.003 | 0.000 | 0.002 | 0.001 | 0.034 | 0.002 | 0.033 | 0.002 | 0.001 |
| Number of burnt deposits generated | | | Burnt deposits/2500 shots | 0 | 0 | 1 | 3 | 0 | 0 | 0 | 13 | 0 | 6 | 6 |
| Flavor | | | - | Good | Good | Good | Good | Good | Good | Good | Good | Good | Poor | Poor |
| Waist haze | | | % | 0.5 | 0.4 | 0.4 | 1.0 | 0.5 | 0.5 | 0.3 | 0.3 | 0.4 | 1.4 | 1.8 |

PET-1: isophthalic acid copolymerized polyethylene terephthalate (grade: UNIPET BK-2180, manufactured by Japan Unipet Co., Ltd.)
OA-1: cobalt salt-containing polybutadiene copolymerized polyethylene terephthalate (Amosorb 4020, manufactured by Color Matrix)
OA-2: Oxygen-absorbing pellet (A) PET-1/MXD6/StCo = 31/68/1 wt %
N-MXD6: polymetaxylene adipamide (MX Nylon S6007, manufactured by MITSUBISHI GAS CHEMICAL COMPANY, INC.)
StCo: cobalt stearate
N6: nylon 6 (1024B, UBE NYLON 1024B manufactured by Ube Industries, Ltd.)
ND: less than lower detection limit

As shown in Table 1, it was found that the bottle of Comparative Example 1, in which an oxygen absorber was not used in the oxygen-absorbing layer, was poor in terms of gas barrier properties. In addition, the bottle of Comparative Example 2, in which an oxygen absorber was not used in the oxygen-absorbing layer and a transition metal was contained in the oxygen-blocking layer, exhibited gas barrier properties that were equivalent to those of the multilayer bottle of the present invention, but therefor, the bottle of Comparative Example 2 needed a larger content of transition metal than that used in the multilayer bottle of the present invention. Accordingly, it was found that, in the case of the bottle of

Comparative Example 2, burnt deposits were generated at a high rate during the molding of a preform, and thus, it was poor in terms of safety and economic efficiency. When the monolayer bottles of Comparative Examples 3, 4 and 5, each of which consisted of only an oxygen-absorbing layer, had almost the same transition metal content as that of the multilayer bottle of the present invention, sufficient gas barrier properties could not be obtained, in comparison to the multilayer bottle of the present invention (Comparative Example 3). If the amount of the oxygen absorber was increased in order to enhance gas barrier properties, the flavor of the content was decreased, and burnt deposits were generated at a high rate during the molding of a preform (Comparative Examples 4 and 5). Moreover, cloudiness was generated on the appearance of the bottles by increasing the amount of the oxygen absorber, resulting in poor appearance (Comparative Examples 4 and 5).

In contrast, in the case of the multilayer bottles of Examples 1 to 6 having the configuration of the present invention, by establishing an oxygen-blocking layer, in which the content of a transition metal selected from the group consisting of cobalt, copper, cerium, aluminum and manganese was reduced to less than 10 ppm, namely, an oxygen-blocking layer comprising substantially no transition metals, these bottles had high gas barrier properties only with the use of a trace amount of oxygen absorber in the container as a whole, and could preserve their content without damaging the flavor of the content. Furthermore, burnt deposits were not generated during the molding of a preform, and thus, the present bottles were also excellent in terms of safety and economic efficiency.

Industrial Applicability

The multilayer plastic container of the present invention can effectively prevent the degradation of content and a reduction in flavor such as taste or aroma, which are caused by oxygen, and also can suppress generation of burnt deposits during molding. The multilayer plastic container of the present invention can be preferably used to store and preserve various products, for example, including: liquid beverages such as carbonated beverage, juice, water, milk, Japanese *sake,* whisky, distilled beverage (*Shochu*), coffee, tea, jelly beverage, or health drink; condiments such as seasoning liquid, source, soy source, dressing, or liquid stock; liquid-based food products such as liquid soup; various types of solid-based food products; liquid or solid pharmaceutical products or quasi-drugs; and cosmetic products such as cosmetic lotion, comestic emulsion, hairdressing, hair dye, or shampoo.

Reference Sign List

| | |
|---|---|
| 1, 3, 5 | Oxygen-absorbing layer |
| 2,4 | Oxygen-blocking layer |

## Claims

1. A multilayer plastic container having at least one oxygen-absorbing layer and at least one oxygen-blocking layer, wherein
the oxygen-absorbing layer is a layer formed from a thermoplastic polyester resin composition comprising a thermoplastic polyester resin and an oxygen absorber, and the content of the oxygen absorber to the total mass of the thermoplastic polyester resin composition is 0.01% to 3% by mass,
the oxygen-blocking layer is a layer formed from a polyamide resin composition comprising a polyamide resin, and the content of a metal selected from the group consisting of cobalt, copper, cerium, aluminum and manganese to the total mass of the polyamide resin composition is less than 10 ppm, and
at least one of the oxygen-absorbing layers is arranged on a side more inside than the oxygen-blocking layer.

2. The container according to claim 1, wherein the polyamide resin comprises 50 mol % or more of m-xylylenediamine units as diamine units.

3. The container according to claim 1 or 2, wherein thermoplastic polyester resin comprises 70 mol % or more of ethylene terephthalate units.

4. The container according to any one of claims 1 to 3, wherein at least one of the oxygen-absorbing layers is arranged such that it is allowed to come into contact with the content.

5. The container according to any one of claims 1 to 4, wherein the oxygen absorber is a composition comprising an

oxygen-scavenging resin that is a polymer to the main chain or branched chain of which a polyolefin oligomer segment having a carbon-carbon double bond binds, and a transition metal compound.

6. The container according to any one of claims 1 to 4, wherein the oxygen absorber is a composition comprising an oxidizable polyamide resin and a transition metal compound.

7. The container according to any one of claims 1 to 6, which has a three-layer structure consisting of an oxygen-absorbing layer / an oxygen-blocking layer / an oxygen-absorbing layer.

8. The container according to any one of claims 1 to 6, which has a five-layer structure consisting of an oxygen-absorbing layer / an oxygen-blocking layer / an oxygen-absorbing layer / an oxygen-blocking layer / an oxygen-absorbing layer.

9. The container according to claim 7 or 8, wherein the oxygen-absorbing layers are allowed to come into contact with one another in at least a portion.

10. The container according to any one of claims 1 to 9, which has the shape of a bottle.

## Patentansprüche

1. Ein Mehrschichtkunststoffbehälter, der mindestens eine Sauerstoff-absorbierende Schicht und mindestens eine Sauerstoff-blockierende Schicht aufweist, wobei die Sauerstoff-absorbierende Schicht eine Schicht ist, gebildet aus einer thermoplastischen Polyesterharzzusammensetzung, die ein thermoplastisches Polyesterharz und einen Sauerstoffabsorber umfasst, und der Gehalt des Sauerstoffabsorbers in der Gesamtmasse der thermoplastischen Polyesterharzzusammensetzung 0,01% bis 3% der Masse beträgt,
die Sauerstoff-blockierende Schicht eine Schicht ist, gebildet aus einer Polyamidharzzusammensetzung, umfassend ein Polyamidharz, und der Gehalt eines Metalls, das aus der Gruppe bestehend aus Cobalt, Kupfer, Cer, Aluminium und Mangan ausgewählt ist, zu der Gesamtmasse der Polyamidharzzusammensetzung weniger als 10 ppm beträgt, und
mindestens eine der Sauerstoff-absorbierenden Schichten sich an einer Seite, die mehr nach innen als die Sauerstoff-blockierende Schicht angeordnet ist, befindet.

2. Der Behälter gemäß Anspruch 1, wobei das Polyamidharz 50 mol-% oder mehr m-Xylylendiamin-Einheiten als Diamineinheiten umfasst.

3. Der Behälter gemäß Anspruch 1 oder 2, wobei das thermoplastische Polyesterharz 70 mol-% oder mehr Ethylenterephthalateinheiten umfasst.

4. Der Behälter gemäß einem der Ansprüche 1 bis 3, wobei mindestens einer der Sauerstoff-absorbierenden Schichten so angeordnet ist, dass sie in Kontakt mit dem Inhalt kommen kann.

5. Der Behälter gemäß einem der Ansprüche 1 bis 4, wobei der Sauerstoffabsorber eine Zusammensetzung ist, umfassend ein sauerstoffabfangendes Harz, das ein Polymer ist, zu dessen Hauptkette oder Seitenkette ein Polyolefin-Oligomersegment bindet, welches eine Kohlenstoff-Kohlenstoff-Doppelbindung aufweist, und eine Übergangsmetallverbindung.

6. Der Behälter gemäß einem der Ansprüche 1 bis 4, wobei der Sauerstoffabsorber eine Zusammensetzung ist, umfassend ein oxidierbares Polyamidharz und eine Übergangsmetallverbindung.

7. Der Behälter gemäß einem der Ansprüche 1 bis 6, welcher eine dreischichtige Struktur aufweist, bestehend aus einer Sauerstoff-absorbierenden Schicht / einer Sauerstoffblockierenden Schicht / einer Sauerstoff-absorbierenden Schicht.

8. Der Behälter gemäß einem der Ansprüche 1 bis 6, welcher eine fünfschichtige Struktur aufweist, bestehend aus einer Sauerstoff-absorbierenden Schicht / einer Sauerstoffblockierenden Schicht / einer Sauerstoff-absorbierenden Schicht / einer Sauerstoffblockierenden Schicht / einer Sauerstoff-absorbierenden Schicht.

9. Der Behälter gemäß Anspruch 7 oder 8, wobei die Sauerstoff-absorbierenden Schichten in mindestens einem Abschnitt miteinander in Kontakt kommen können.

10. Der Behälter gemäß einem der Ansprüche 1 bis 9, welcher die Form einer Flasche aufweist.

**Revendications**

1. Récipient plastique multicouche ayant au moins une couche absorbant l'oxygène et au moins une couche bloquant l'oxygène, dans lequel
la couche absorbant l'oxygène est une couche formée à partir d'une composition de résine de polyester thermoplastique comprenant une résine de polyester thermoplastique et un absorbeur d'oxygène, et la teneur en l'absorbeur d'oxygène par rapport à la masse totale de la composition de résine de polyester thermoplastique est de 0,01 % à 3 % en masse,
la couche bloquant l'oxygène est une couche formée à partir d'une composition de résine de polyamide comprenant une résine de polyamide, et la teneur en un métal choisi dans le groupe constitué par le cobalt, le cuivre, le cérium, l'aluminium et le manganèse par rapport à la masse totale de la composition de résine de polyamide est inférieure à 10 ppm, et
au moins l'une des couches absorbant l'oxygène est disposée sur un côté plus à l'intérieur que la couche bloquant l'oxygène.

2. Récipient selon la revendication 1, dans lequel la résine de polyamide comprend 50 % en moles ou plus de motifs m-xylylènediamine en tant que motifs diamine.

3. Récipient selon la revendication 1 ou 2, dans lequel la résine de polyester thermoplastique comprend 70 % en moles ou plus de motifs téréphtalate d'éthylène.

4. Récipient selon l'une quelconque des revendications 1 à 3, dans lequel au moins l'une des couches absorbant l'oxygène est disposée de façon qu'elle puisse venir en contact avec le contenu.

5. Récipient selon l'une quelconque des revendications 1 à 4, dans lequel l'absorbeur d'oxygène est une composition comprenant une résine piégeant l'oxygène qui est un polymère à la chaîne principale ou la chaîne latérale duquel se lie un segment oligomère de polyoléfine ayant une double liaison carbone-carbone, et un composé de métal de transition.

6. Récipient selon l'une quelconque des revendications 1 à 4, dans lequel l'absorbeur d'oxygène est une composition comprenant une résine de polyamide oxydable et un composé de métal de transition.

7. Récipient selon l'une quelconque des revendications 1 à 6, qui a une structure à trois couches consistant en une couche absorbant l'oxygène / une couche bloquant l'oxygène / une couche absorbant l'oxygène.

8. Récipient selon l'une quelconque des revendications 1 à 6, qui a une structure à cinq couches consistant en une couche absorbant l'oxygène / une couche bloquant l'oxygène / une couche absorbant l'oxygène / une couche bloquant l'oxygène / une couche absorbant l'oxygène.

9. Récipient selon la revendication 7 ou 8, dans lequel les couches absorbant l'oxygène peuvent venir en contact les unes avec les autres dans au moins une partie.

10. Récipient selon l'une quelconque des revendications 1 à 9, qui a la forme d'une bouteille.

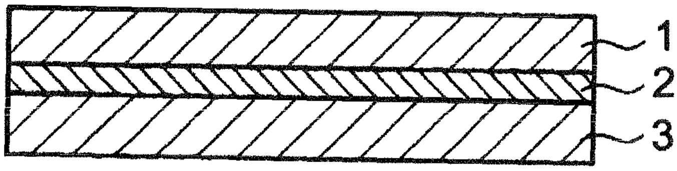


Fig. 1

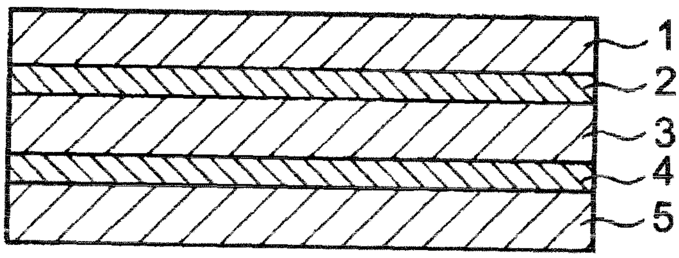


Fig. 2

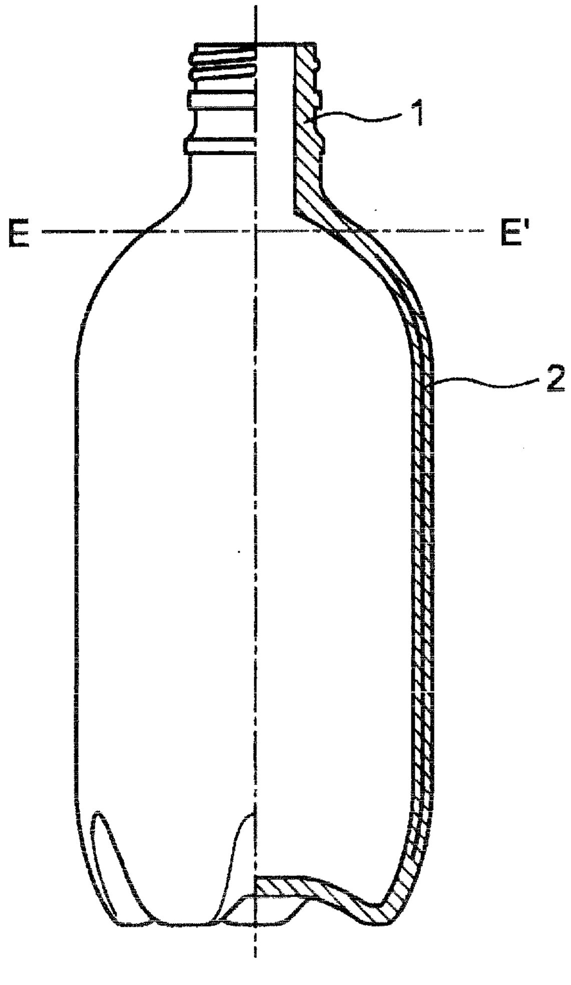


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63178930 A
- JP 2002321774 A
- JP 2006281640 A
- JP 5032277 A
- EP 1475308 A1
- JP 2001048182 A
- JP 4569270 B
- JP 5181671 B
- JP 2008081529 A
- JP 7330042 A